(19) Europäisches Patentamt
European Patent Office
Office européen des brevets

(11) EP 2 799 510 B1

(12) **EUROPEAN PATENT SPECIFICATION**

(45) Date of publication and mention of the grant of the patent:
**28.06.2017 Bulletin 2017/26**

(21) Application number: **12861064.9**

(22) Date of filing: **25.12.2012**

(51) Int Cl.:
***C09K 3/10*** *(2006.01)* ***C08F 299/00*** *(2006.01)*
***C08J 3/24*** *(2006.01)* ***C08K 3/36*** *(2006.01)*
***C08L 101/00*** *(2006.01)* ***F16J 15/14*** *(2006.01)*

(86) International application number:
**PCT/JP2012/083464**

(87) International publication number:
**WO 2013/099864 (04.07.2013 Gazette 2013/27)**

(54) **ACTIVE ENERGY RAY CURING RESIN COMPOSITION, METHOD FOR MANUFACTURING SAME, AND SEAL MATERIAL USING SAME**

AKTIVE ENERGIESTRAHLENHÄRTENDE HARZZUSAMMENSETZUNG, HERSTELLUNGSVERFAHREN DAFÜR UND DICHTUNGSMATERIAL DAMIT

COMPOSITION DE RÉSINE À POLYMÉRISATION PAR RAYON D'ÉNERGIE ACTIVE, PROCÉDÉ DE FABRICATION POUR CELA ET MATÉRIAU D'ÉTANCHÉITÉ L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2011 JP 2011287165**
**06.09.2012 JP 2012196529**

(43) Date of publication of application:
**05.11.2014 Bulletin 2014/45**

(73) Proprietor: **Taica Corporation**
**Minato-ku**
**Tokyo 108-0074 (JP)**

(72) Inventors:
- **NAGATA, Shinichiro**
**Tokyo 108-0074 (JP)**
- **AZUMA, Shunichi**
**Tokyo 108-0074 (JP)**
- **SASAZAWA, Takahiro**
**Tokyo 108-0074 (JP)**

(74) Representative: **TBK**
**Bavariaring 4-6**
**80336 München (DE)**

(56) References cited:
**WO-A1-2010/142872**
**JP-A- H06 157 857**
**JP-A- 2003 105 320**
**JP-A- 2008 013 429**
**JP-A- 2008 094 902**
**JP-A- 2009 090 231**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 799 510 B1

**Description**

Technical Field

The present invention relates to an active energy ray-curable resin composition to be irradiated with an active energy ray to be thereby cured, more specifically relates to an active energy ray-curable resin composition suitable as a bead-shaped seal material high in shape dimensional precision and excellent in productivity, and a method for producing the same and a seal material using the same.

Background Art

With the reduction in size of electronic devices, small sized component parts are being developed. As component parts are reduced in size, seal materials (packing, gasket, and the like) for use in component parts such as cases are shifting to have finer linewidth specifications, and for example, seal materials having a width of about 1 mm are currently used. Meanwhile, as seal materials have a finer linewidth, it is more difficult to incorporate seal materials subjected to molding into component parts such as cases, causing an increase in cost.

As a measure therefor, there has been proposed a method including directly discharging a liquid seal material such as an ultraviolet ray-curable resin from a needle-shaped coating part to a portion, on which a seal material such as a case is to be mounted, in a bead-shaped (linear) manner for applying (hereinafter, referred to as "needle applying"), and curing a bead-shaped discharged object by an ultraviolet ray to form a seal material and at the same time to fix the seal material (see, for example, Patent Literatures 1 and 2). In addition, from the viewpoint of enhancing the dischargeability (coatability) of such a liquid seal material and the shape retention property of the bead-shaped discharged object, before curing, applied, Patent Literature 1 also discloses a technique for adding silica particles to the ultraviolet ray-curable resin, and Patent Literature 2 also discloses a technique for adjusting the viscosity of an applying material to about 1 to 1000 Pa·s under a coating temperature.

In the above method and techniques, however, if needle applying is performed with a discharge port of the needle-shaped coating part having such a small diameter that the seal material has a finer or narrower linewidth, the bead-shaped discharged object easily droops because of being liquid, and the bead-shaped discharged object has a small line diameter, thereby making it difficult to provide a seal material having a sufficient height (thickness) for ensuring of seal property. Therefore, there has been a need for a seal material having a narrow linewidth and a sufficient height.

As measures for achieving such desired performances, the following methods and the like have been proposed.

(i) A method for adopting a liquid seal material having thixotropic property to prevent drooping after applying (see, for example, **Patent Literature 3:** JP 2003 105320 A**), wherein such as an inorganic** filling agent is added to a urethane acrylate-based photo-curable resin to afford a high thixotropic property to the resin and a viscosity at room temperature (25°C) of the resin is measured using a rotation viscometer, the viscosity is 10,000 to 150,000 mPa·s at 20 rotations/min (20 rpm), and is 100,000 to 1,500,000 mPa·s at 2 rotations/min (2 rpm).

(ii) A method for allowing a discharge port of a needle-shaped coating part to have a shape of a large height/width ratio (see, for example, Patent Literature 4), wherein a gasket seal material such as an ultraviolet ray-curable urethane having a viscosity of about 500 to 50,000 poise is used and a needle whose discharge port has an opening shape of a large height/width ratio such as a trapezoidal shape is used to thereby form a bead-shaped gasket.

(iii) A method for ensuring height by applying a liquid seal material at two stages (see, for example, Patent Literature 5), wherein an ultraviolet ray-curable elastomer having a JIS A rubber hardness of about 20 to 60° is applied as a gasket material using a dispenser, and again further applied to be two-layered, and the resultant is cured by an ultraviolet ray to mold a gasket having a height of about 0.5 to 3 mm.

It is further known from patent document JP 2009 090231 A a method for forming elastic member which is carried out by discharging a photocurable liquid resin material droplet-wise on a substrate and irradiating the liquid resin material after discharged with light.

It is further known from patent document JP 2008 013429 A a sealant which contains the precipitated silica having a SiOH-isolated absorbance ratio equal to or greater than 1.

It is further known from patent document JP H06 157857 A a sealing material composition which mainly comprises a vinyl chloride resin of 18 to 28% by weight of the whole constituent and is adjusted so that the ratio of the viscosity at 20°C under a shear rate of 4.2 $sec^{-1}$ to under a shear rate of 62 $sec^{-1}$ is 5.5 to 7.5 and the ratio of the viscosity under a shear rate of 103 $sec^{-1}$ to under a shear rate of 104 $sec^{-1}$ is 1.2 to 1.8, and the vinyl chloride resin which has particle size distribution with two peaks of 0.7-1 micrometer and 2.5-5 micrometers, is 3 to 15% by weight of the whole constituent.

It is further known from patent document WO 2010/142872 A1 a filler which is composed of 30% to 70% of

finely divided silica with a BET specific surface area of greater than 40 $m^2/g$, and of 70% to 30% of more coarsely divided silicas with a specific surface area of less than 30 $m^2/g$ to confer good mechanical and rheological characteristics on a elastomer.

It is further known from patent document JP 2008 094902 A a thixotropic sealant which contains (A) a liquid epoxy resin, (B) an acid anhydride curing agent having a free acid content of ≤0.1 mass%, (C) an inorganic filler containing ≤1 mass% particles having a particle diameter of ≥128 μm and having an average particle diameter of 5-20 μm, and (D) an inorganic filler surface-treated with a non-reactive organic silicon compound and having an average particle diameter of 0.01-0.1 μm.

Citation List

Patent Literatures

Patent Literature 1: Japanese Patent Laid-Open No. 1995-088430
Patent Literature 2: Japanese Patent Laid-Open No. 2004-289943
Patent Literature 3: Japanese Patent Laid-Open No. 2003-105320
Patent Literature 4: Japanese Patent Laid-Open No. 2001-182836
Patent Literature 5: Japanese Patent Laid-Open No. 2003-120819

Summary of Invention

Technical Problem

As a seal material having a narrower linewidth is demanded, however, the degree of technical difficulty for ensuring dimensional precision and applying property in needle applying is higher, making it difficult to satisfy all of quality, productivity, cost performance, and the like by the methods (i) to (iii). For example, as the inner diameter of the needle (discharge port diameter) is smaller, it is more difficult to discharge the liquid seal material. Therefore, if a low viscosity material is selected with a preference for dischargeability, there is a problem that drooping is caused after applying to extend the linewidth of the seal material, making impossible to ensure the intended linewidth and height or thickness.

On the other hand, if the viscosity and the thixotropic property of the liquid seal material are higher from the viewpoint of ensuring the height or thickness of the seal material, the following problems are caused.

(a) Since the liquid seal material is discharged in a high pressure (high-shearing speed), it is subjected to stress-releasing immediately after being discharged from the needle to easily cause the diameter of the bead-shaped discharged object to be expanded (Swell), and the bead-shaped discharged object has a wider linewidth than the intended one even by using a needle having an smaller inner diameter, making it difficult to achieve a narrower linewidth. Furthermore, if the inner diameter of the needle is smaller in view of the diameter expansion (Swell), it is much more difficult to discharge the liquid seal material, resulting in the reduction in productivity and leading to no essential solution.

(b) If the applying speed (line-drawing speed) of the liquid seal material is made higher, tensile stress acts on beads discharged from the needle to make the bead diameter unstable or to cut the bead-shaped discharged object, hardly resulting in the increase in productivity.

Therefore, there is a need for a technique that can form a bead-shaped seal material high in shape dimensional precision and excellent in productivity, and narrow in linewidth and sufficiently high in height.

In view of the problems in the prior art, an object of the present invention is to provide an active energy ray-curable resin composition for seal materials, which is suitable as a bead-shaped seal material high in shape dimensional precision and excellent in productivity. In particular, it is to provide an active energy ray-curable resin composition for seal materials, which is excellent in dischargeability during needle applying, hardly causes diameter expansion (Swell) of beads discharged, is high in shape retention property after being applied, and is hardly cut by and is stable against tensile stress at the time of needle applying, and seal materials using the same.

Solution to Problem

The present inventors have made intensive studies in order to solve the problems, and as a result, have found

that a composition obtained by allowing an active energy ray-curable resin such as an ultraviolet ray-curable resin to contain at least a thixotropy imparting agent **made of** silica fine particles in specified amounts is adjusted so as to have specified properties and performances such as specified viscosity and thixotropic coefficient, and the silica fine particles contained in the active energy ray-curable resin are dispersed in the active energy ray-curable resin so as to exhibit a particle size distribution having a plurality of peaks, thereby surprisingly providing an active energy ray-curable resin composition for seal materials, as a resin composition for seal materials, which is excellent in dischargeability even in the case of applying using a small needle having an inner diameter of 1 mm or less, hardly causes (or is small in) diameter expansion (Swell) of beads discharged, is high in shape retention property after being applied, and is hardly cut by and is stable against tensile stress at the time of needle applying. The present invention has been completed based on such a finding.

In order to solve the problems, the present invention provides an active energy ray-curable resin composition for seal materials, including at least a thixotropy imparting agent (B) in an amount of 0.1 to 25 parts by weight dispersed in 100 parts by weight of an active energy ray-curable resin (A), wherein the active energy ray-curable resin composition has an apparent viscosity in an uncured state (according to JIS Z8803, cone and plate rotation viscometer, 40°C) of 50 to 5000 Pa·s in a shearing speed range from 0.1 to 10 /sec and has a thixotropic coefficient, determined from the apparent viscosity in the shearing speed range, of 1.1 to 10, the thixotropy imparting agent (B) is made of silica fine particles, and the silica fine particles in the active energy ray-curable resin (A) exhibit a particle size distribution having a plurality of peaks.

The silica fine particles as the thixotropy imparting agent can be selected so that they are dispersed in the active energy ray-curable resin in such a given amount as to exhibit a particle size distribution having a plurality of peaks, and the resultant active energy ray-curable resin composition has an apparent viscosity in an uncured state of 50 to 5000 Pa·s in a shearing speed range from 0.1 to 10 /sec and a thixotropic coefficient of 1.1 to 10. Thus, an active energy ray-curable resin composition for seal materials is obtained which is excellent in dischargeability even in the case of needle applying using a needle having a small inner diameter, hardly causes diameter expansion (Swell) of beads, is high in shape retention property after being applied, and is hardly cut by and is stable against tensile stress at the time of needle applying.

The seal material in the present invention here means one that can be arranged between at least two acting members to exert various functions such as waterproof property, dust resistance, cushioning property, vibration-proofing property, vibration-damping property, stress relaxation property, gap complementary property, backlash resistance, slippage resistance and collision noise reduction property, and also includes not only one that is arranged between two acting members, but also one that is arranged on one acting member to exert the various functions, with, for example, one surface opening.

The active energy ray-curable resin composition for seal materials of the present invention preferably has a relative particle amount in a particle diameter range having the largest peak area in the particle size distribution of the silica fine particles in the active energy ray-curable resin (A), of 30 to 90%. In order that aggregated particles formed by the silica fine particles are dispersed in the active energy ray-curable resin so as to exhibit a particle size distribution having a plurality of peaks, more suitable dispersion conditions are selected. Thus, an active energy ray-curable resin composition for seal materials is obtained, which is more excellent in dischargeability, hardly causes diameter expansion (Swell) of beads, is high in shape retention property after being applied, and is hardly cut by and is stable against tensile stress at the time of needle applying.

The active energy ray-curable resin composition for seal materials of the present invention also preferably has a particle diameter at the peak of the largest peak area in the particle size distribution of the silica fine particles, of 0.05 to 1 $\mu$m. In order that aggregated particles formed by the silica fine particles are dispersed in the active energy ray-curable resin so as to exhibit a particle size distribution having a plurality of peaks, more suitable dispersion conditions are selected. Thus, an active energy ray-curable resin composition for seal materials is obtained, which is excellent in dischargeability, hardly causes diameter expansion (Swell) of beads, is high in shape retention property after being applied, and is hardly cut by and is stable against tensile stress at the time of needle applying.

In addition, the silica fine particles of the active energy ray-curable resin composition for seal materials of the present invention are preferably made of a hydrophobic silica having a degree of hydrophobicity of 50 to 90%. Thus, a material suitable as the silica fine particles is selected.

In addition, the active energy ray-curable resin (A) of the active energy ray-curable resin composition for seal materials of the present invention is preferably an ultraviolet ray-curable resin. Thus, a material suitable as the active energy ray-curable resin is selected.

In addition, the active energy ray-curable resin (A) of the active energy ray-curable resin composition for seal materials of the present invention is preferably one or more active energy ray-curable resins selected from the group consisting of a silicone-based resin, an acrylic resin and a urethane-based resin. Thus, a material further suitable as the active energy ray-curable resin is selected.

Furthermore, the present invention provides a method for producing the active energy ray-curable resin composition for seal materials, including at least a blending step of blending the active energy ray-curable resin (A) with the silica fine particles, a dispersion step of dispersing the silica fine particles in the active energy ray-curable resin (A), and an aging step of leaving the active energy ray-curable resin, in which the silica fine particles are dispersed, to still stand for a predetermined period, wherein the dispersion step is to disperse the silica fine particles in the active energy ray-curable resin (A) so that the silica fine particles exhibit a particle size distribution having a plurality of peaks and have a relative particle amount of 30 to 90% in a particle diameter range having the largest peak area in the particle size distribution.

The method for producing an active energy ray-curable resin composition for seal materials of the present invention includes a blending step of blending the active energy ray-curable resin with the silica fine particles as a thixotropy imparting agent, a dispersion step of dispersing the silica fine particles in the active energy ray-curable resin so that the silica fine particles exhibit a particle size distribution having peaks in a plurality of particle diameter ranges and have a relative particle amount in a particle diameter range having the largest peak area in the particle size distribution, of 30 to 90%, and an aging step of leaving the active energy ray-curable resin, in which the silica fine particles are dispersed, to still stand for a predetermined period. The dispersion step allows the silica fine particles as a thixotropy imparting agent to be dispersed under the desired condition, and the aging step allows the resulting active energy ray-curable resin composition to be stabilized in terms of physical properties including apparent viscosity and thixotropic coefficient. Thus, an active energy ray-curable resin composition for seal materials is obtained, which is excellent in dischargeability even if needle applying is performed using a needle having a small inner diameter, hardly causes diameter expansion (Swell) of beads, is high in shape retention property after being applied, and furthermore is hardly cut by and is stable against tensile stress at the time of needle applying.

In addition, in the method for producing an active energy ray-curable resin composition for seal materials of the present invention, a particle diameter at a peak in the largest peak area in the particle size distribution of the silica fine particles is preferably 0.05 to 1 μm in the dispersion step. Thus, more suitable dispersion conditions in the dispersion step are selected.

Furthermore, the present invention provides a seal material obtained by using the active energy ray-curable resin composition for seal materials. Thus, a seal material is obtained which is narrow in linewidth even in the case of being formed by needle applying, and which has a line diameter cross section height close to the diameter or the height of the discharge port of the needle (is sufficiently high in height).

In addition, the seal material of the present invention preferably has a horseshoe-like shape as the line diameter cross section shape. Thus, a seal material is obtained which is excellent in adhesiveness to a substrate for application and in low deformability under stress while being narrow in linewidth and having a line diameter cross section height close to the diameter or the height of the discharge port of the needle.

Furthermore, the present invention provides a seal structure in which the seal material obtained by using the active energy ray-curable resin composition for seal materials or the seal material having a horseshoe-like shape as the line diameter cross section shape is sandwiched between a first substrate to be sealed and a second substrate to be sealed.

The present invention provides a method for producing a seal material, including at least a bead-shaped discharged object formation step of discharging the active energy ray-curable resin composition for seal materials from a discharge port of a needle-shaped coating part to form a bead-shaped discharged object and a curing step of irradiating the bead-shaped discharged object with an active energy ray for curing, wherein the discharge port has an inner diameter of 1 mm or less. Since the active energy ray-curable resin composition for seal materials of the present invention hardly causes diameter expansion (Swell) of beads, is high in shape retention property after being applied, and also is hardly cut by and has stability against tensile stress at the time of needle applying, it is suitable for needle applying from a discharge port having an extremely small inner diameter of 1 mm or less. The bead-shaped discharged object can be formed by needle applying from the discharge port having an extremely small diameter of the needle-shaped coating part and irradiated with an active energy ray for curing, thereby providing a seal material having a sufficient height while an extremely small line diameter being realized.

In addition, the bead-shaped discharged object formation step of the method for producing a seal material of the present invention is preferably to discharge the active energy ray-curable resin composition for seal materials on a substrate for application, while relatively transferring the discharge port of the needle-shaped coating part to the substrate for application, to form a bead-shaped discharged object, wherein a relative transfer speed of the discharge port of the needle-shaped coating part to the substrate for application is higher than a discharge speed of the active energy ray-curable resin composition for seal materials from the discharge port of the needle-shaped coating part.

The active energy ray-curable resin composition of the present invention is continuously discharged from the discharge port of the needle-shaped coating part so as to have a bead shape, and disposed on the substrate for application while keeping such a continuous bead shape. When the relative transfer speed of the needle-shaped coating part to the substrate for application is here higher than the discharge speed of the active energy ray-curable resin composition from the discharge port, a bead-shaped discharged object immediately after being discharged from the discharge port of the

needle-shaped coating part is pulled to be elongated by the bead-shaped discharged object disposed on the substrate for application, and thus disposed on the substrate for application in a state of having a smaller diameter than the bead diameter upon being discharged from the discharge port of the needle-shaped coating part, thereby making it possible to provide a seal material having a smaller diameter. Since the bead-shaped discharged object made of the active energy ray-curable resin composition of the present invention is more stable, the bead-shaped discharged object is hardly cut even at a higher transfer speed, and a continuous seal material having a small diameter can be obtained.

In addition, the curing step of the method for producing a seal material of the present invention includes at least a preliminary irradiation step of semi-curing the bead-shaped discharged object, and a main irradiation step of irradiating the resultant with an active energy ray until a degree of crosslinking of the active energy ray-curable resin composition for seal materials for forming the bead-shaped discharged object reaches 90% or more, to cure the bead-shaped discharged object. When the bead-shaped discharged object is semi-cured by the preliminary irradiation with an active energy ray, the bead-shaped discharged object has proper stickiness on the outer surface thereof while retaining its shape, and thus the bead-shaped discharged object in a semi-cured state is brought into contact with and stuck to the substrate for application, while having a suitable shape. Therefore, the adhesiveness between the substrate for application and the seal material can be improved while the shape accuracy of the seal material is kept, and such failures as position displacement and separation of the seal material due to vibration or impact during subsequent handling and transfer operations can be avoided.

In addition, in the preliminary irradiation step, the light amount of the active energy ray with which the bead-shaped discharged object is irradiated is preferably 1 to 50% as a cumulative light amount based on a cumulative light amount in which the degree of crosslinking of the active energy ray-curable resin composition for seal materials for forming the bead-shaped discharged object reaches 90% or more. Thus, a suitable light amount in which the bead-shaped discharged object is to be irradiated in the preliminary irradiation step is selected.

In addition, an intermediate processing step of allowing the bead-shaped discharged object in the semi-cured state to partially flow for change in shape is preferably provided between the preliminary irradiation step and the main irradiation step. Thus, the angular portion in the axis cross section of the bead-shaped discharged object can be subjected to chamfering such as rounding to be easily deformed in use, or the bead-shaped discharged object can be formed so as to have a round axis cross section and then the bottom surface thereof can be intentionally formed so as to increase the contact area with the substrate for application, thereby providing a bead-shaped seal material in which the axis cross section exhibits a horseshoe-like shape.

Furthermore, the preliminary irradiation step in the curing step is also preferably initiated between discharging of the active energy ray-curable resin composition for seal materials from the discharge port of the needle-shaped coating part and bringing of the bead-shaped discharged object into contact with the substrate for application. The bead-shaped discharged object can be preliminarily irradiated with an active energy ray immediately after being discharged from the needle-shaped coating part, to thereby stabilize the shape of the bead-shaped discharged object, resulting in the improvement in the shape accuracy of the seal material.

Advantageous Effects of Invention

The active energy ray-curable resin composition for seal materials of the present invention exerts such remarkable effects that the composition is excellent in dischargeability during needle applying, hardly causes diameter expansion (Swell) of the bead-shaped discharged object, is excellent in discharge shape accuracy of the bead-shaped discharged object, and also is high in shape retention property after being applied, and furthermore the bead-shaped discharged object is hardly cut by and is stable against tensile stress at the time of applying. Therefore, a seal material can be effectively obtained which is narrow in linewidth, and which has a line diameter cross section height close to the diameter or the height of the discharge port of the needle (is sufficiently high in height). The active energy ray-curable resin composition for seal materials of the present invention is specifically suitable for forming a bead-shaped seal material by needle applying with a needle having an extremely small inner diameter of 1 mmφ or less, and in particular, in the case of using a needle having a further extremely small inner diameter of 0.75 mmφ or less, remarkably exerts such effects that the composition hardly causes diameter expansion (Swell) of the bead-shaped discharged object, is excellent in diameter accuracy of the bead-shaped discharged object and also is high in shape retention property after being applied, and furthermore that the bead-shaped discharged object is hardly cut by and is stable against tensile stress at the time of applying. As a result, a seal material that has a sufficient height while realizing an extremely small line diameter is obtained with high productivity, contributing to the reduction in size of an electronic device into which the seal material is incorporated, and cost reduction.

Brief Description of Drawings

[Figure 1] Figure 1 is a diagram for illustrating the terms "peak" and "peak area" in a particle size distribution of silica fine particles in the present invention.

[Figure 2] Figure 2 is a diagram for illustrating one example of a method for calculating a relative particle amount in a particle diameter range having the largest peak area in the particle size distribution of silica fine particles in the present invention.

[Figure 3] Figure 3 is a flowchart for schematically illustrating a method for producing an active energy ray-curable resin composition for seal materials according to a first embodiment of the present invention.

[Figure 4] Figure 4 is a flowchart for schematically illustrating a method for producing an active energy ray-curable resin composition for seal materials according to a second embodiment of the present invention.

[Figure 5] Figure 5 is a schematic view for illustrating an example of a coating apparatus of a bead-shaped seal material (bead-shaped discharged object).

[Figure 6] Figure 6 is a schematic view for illustrating an example of a line diameter cross section shape of a bead-shaped seal material obtained by using the active energy ray-curable resin composition of the present invention.

[Figure 7] Figure 7 is a flowchart for schematically illustrating a method for producing a seal material according to the first embodiment of the present invention.

[Figure 8] Figure 8 is a flowchart for schematically illustrating a method for producing a seal material according to the second embodiment of the present invention.

[Figure 9] Figure 9 is a schematic view for showing one example of a seal structure of the present invention.

[Figure 10] Figure 10 is a schematic view for showing another aspect of the seal structure of the present invention.

[Figure 11] Figure 11 is a schematic view for showing an applying pattern of a bead-shaped discharged object for testing in Examples.

[Figure 12] Figure 12 is a view for showing a particle size distribution of aggregated particles of silica fine particles in the active energy ray-curable resin composition for seal materials of the present invention.

Description of Embodiments

The active energy ray-curable resin composition for seal materials of the present invention (hereinafter, also simply referred to as the "resin composition" or the "curable resin composition" in some cases) includes at least a thixotropy imparting agent (B) in an amount of 0.1 to 25 parts by weight dispersed in 100 parts by weight of an active energy ray-curable resin (A), wherein the active energy ray-curable resin composition has an apparent viscosity in an uncured state (according to JIS Z8803, cone and plate rotation viscometer, 40°C) of 50 to 5000 Pa·s in a shearing speed range from 0.1 to 10 /sec and has a thixotropic coefficient, determined from the apparent viscosity in the shearing speed range, of 1.1 to 10, the thixotropy imparting agent (B) is made of silica fine particles, and the particle size distribution of the silica fine particles in the active energy ray-curable resin (A) has a plurality of peaks in different particle diameter ranges. Hereinafter, the description will be made in every section.

1. Active energy ray-curable resin (A)

The active energy ray-curable resin (A) for use in the active energy ray-curable resin composition for seal materials of the present invention is a resin that can be cured by an active energy ray described later. The active energy ray-curable resin (A) is not particularly limited as long as it can be cured by the active energy ray, but is preferably an ultraviolet ray-curable resin for use in various fields. Specifically, a silicone-based resin, an acrylic resin, a urethane-based resin or a combination thereof is preferable, and a silicone-based resin is more preferable from the viewpoint of simultaneously satisfying fluidity in an uncured state and flexibility in a cured state. In addition, the viscosity of the active energy ray-curable resin is preferably 0.1 to 4,500 Pa·s (according to JIS Z8803, cone and plate rotation viscometer, 40°C), more preferably 1 to 1,000 Pa·s, and particularly preferably 1 to 200 Pa·s.

Hereinafter, the silicone-based resin will be specifically described with reference to representative examples. As the silicone-based resin, any known active energy ray-curable silicone-based resin is used. The silicone-based resin is prepared by, for example, mixing an organopolysiloxane having in the molecule at least one acrylic group or methacryloyl group represented by the following formula [1] (wherein $R^1$ represents hydrogen or an alkyl group, and $R^n$ represents $(CH_2)_n$ and satisfies $1 \leq n \leq 20$),

[Formula 1]

$$-\overset{|}{\underset{|}{Si}}-R^{n}OCOCR^{1}=CH_{2} \quad \cdots [1]$$

an organopolysiloxane containing an unsaturated double bond represented by the following formula [2] (wherein $R^1$ represents hydrogen or an alkyl group, and $R^n$ represents $(CH_2)_n$ and satisfies $0 \leq n \leq 10$), and

[Formula 2]

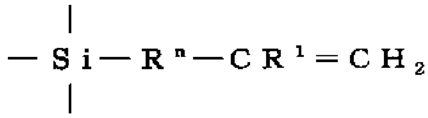

· · · [2]

an organopolysiloxane in the molecule at least two mercaptoalkyl groups represented by the following formula [3] (wherein $R^n$ represents $(CH_2)_n$ and satisfies $0 \leq n \leq 10$).

[Formula 3]

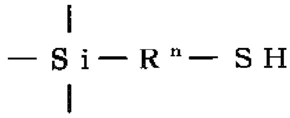

· · · [3]

In addition, as the acrylic resin and the urethane-based resin, any known active energy ray-curable resins can be used as in the case of the silicone-based resin.

The active energy ray refers to an infrared ray, a visible light ray, an ultraviolet ray, an X-ray, an electron beam, an alpha ray, a beta ray, a gamma ray, or the like, and in particular, an ultraviolet ray is suitably used. The ultraviolet ray in the present invention includes a near-ultraviolet ray (near UV, wavelength: 200 to 380 nm), a far-ultraviolet ray (wavelength: 10 to 200 nm) and an extreme-ultraviolet ray (extreme UV, wavelength 1 to 10 nm). These active energy rays can also be used singly or in combination of two or more. A radiation source for these active energy rays is not particularly restrained as long as it achieves such an object that the resin composition, with which the substrate for application is coated or which is applied to the substrate, is cured in a short time, but a known generation measure such as a low pressure mercury lamp, a high pressure mercury lamp, an excimer ultraviolet ray (excimer UV) lamp, a halide lamp or laser can be utilized as a radiation source for ultraviolet rays. In addition, examples of a radiation source for infrared rays include a lamp, a resistance heating plate or laser, examples of a radiation source for visible light rays include direct sunlight, a lamp, a fluorescent lamp or laser, and examples of a radiation source for electron beams include an apparatus that utilizes thermal electrons generated from a commercially available tungsten filament, a cold cathode type apparatus that passes high-voltage pulse through a metal to generate a cold cathode, and a secondary electron type apparatus that utilizes secondary electrons generated by collision of an ionized gaseous molecule and a metal electrode. Furthermore, examples of a radiation source for alpha rays, beta rays and gamma rays include fissionables such as $Co^{60}$, and with respect to that for gamma rays, a vacuum tube that allows accelerated electrons to collide to an anode, or the like can be utilized.

2. Thixotropy imparting agent (B)

The active energy ray-curable resin composition for seal materials of the present invention includes at least the thixotropy imparting agent (B) dispersed in the active energy ray-curable resin (A). The thixotropy imparting agent (B) refers to a general additive that can afford to a liquid resin or the like thixotropic property, namely, such a property that results in the increase in viscosity in the low-shearing speed region and the reduction in viscosity in the high-shearing speed region, and examples thereof include a compound that is swollen by being added to a resin, and that forms a moderate network structure by a relatively weak bonding force such as a hydrogen bonding force or a van der Waals' force. Such an additive is commercially available as a paint additive under the name of an anti-drooping agent, an anti-settling agent, a thixotropic agent, or the like. A resin in which the thixotropy imparting agent is dispersed evenly has such a property that a moderate network structure is held in the low-shearing speed region to thereby result in the increase in apparent viscosity and the network structure is broken in the high-shearing speed region by a shearing force to thereby result in the reduction in the viscosity.

As such a thixotropy imparting agent, fine powder silica (silica fine particles) is particularly suitably used in the present invention.

Specific examples of the silica fine particles, include AEROSIL (registered trademark) produced by Evonik Industries and REOLOSIL (registered trademark) produced by Tokuyama Corporation, CAB-O-SIL (registered trademark) produced by CABOT Corporation, fumed silica typified by WACKER HDK (registered trademark) produced by

Wacker Asahikasei Silicone Co., Ltd., NIPSIL (registered trademark) produced by Nippon Silica Co., Ltd., Sylisia (registered trademark) produced by Fuji Silysia Chemical Ltd., and TOKUSIL (registered trademark) produced by Tokuyama Corporation.

When the **silica** fine particles as the thixotropy imparting agent are dispersed in the active energy ray-curable resin (A), primary particles of the **silica** fine particles aggregate to form a network structure while forming aggregated particles, and the network structure affords thixotropic property. The primary particle diameter of the **silica** fine particles is selected so that the dispersibility in the active energy ray-curable resin (A), the thixotropic property-imparting effect, and the viscosity of the resulting active energy ray-curable resin composition are preferable in the present invention, and specifically, is preferably 0.005 μm to 10 μm, further preferably 0.007 μm to 1 μm, and further more preferably 0.010 μm to 0.1 μm. Herein, the numeral value of the primary particle diameter of the **silica** fine particles is a value obtained by measuring the longest diameters of the respective profiles of primary particle images of 1000 fine particles randomly selected in the image at such a magnification that allows the primary particles to be visually observed in SEM or TEM (transmission electron microscope), and subjecting them to arithmetic average processing. Herein, the specific surface area (BET method according to DIN66131) corresponding to the primary particle **diameter of the silica fine particles is 0.3 to 600 $m^2$/g, further preferably 3 to 430 $m^2$/g**, and further more preferably 30 to 600 $m^2$/g.

As the **silica** fine particles, various known **silica** fine particles that are any one or both of hydrophilic and hydrophobic can be used, but hydrophobic **silica** fine particles are preferable from the viewpoint of the dispersibility in the active energy ray-curable resin (A). Specifically, **silica** fine particles having a degree of hydrophobicity of less than 50% are not preferable because the dispersibility in the active energy ray-curable resin (A) is deteriorated and thus the resulting active energy ray-curable resin composition is poor in fluidity and is remarkably deteriorated in terms of dischargeability(coatability), and on the other hand, **silica** fine particles having a degree of hydrophobicity of more than 90% are not preferable because the resin composition hardly ensures thixotropic property to deteriorate the shape maintaining property of the bead-shaped discharged object. Therefore, the **silica** fine particles preferably have a degree of hydrophobicity of 50% to 90%, more preferably 60% to 80%. Herein, while the **silica** fine particles are hydrophobized by a known treatment method, preferable examples include silica fine particles subjected to a hydrophobizing treatment with a trimethylsilyl-based or dimethyldichlorosilane-based compound, and more preferable examples include silica fine particles subjected to a hydrophobizing treatment with a trimethylsilyl-based compound, from the viewpoint of the dispersibility in the active energy ray-curable resin (A). The silica fine particles subjected to a hydrophobizing treatment with a trimethylsilyl-based compound are used to thereby exert also such an effect that reduces the change in viscosity of the resulting active energy ray-curable resin composition over time to stabilize physical properties.

The degree of hydrophobicity of the **silica** fine particles in the present specification is a value measured by a methanol titration test. In a methanol titration test, when methanol is gradually added to fine particles floating in distilled water and the substantially total amount of the fine particles are settled in a mixed liquid of distilled water and methanol, the value of the volume percentage of methanol is measured as the degree of hydrophobicity. Specifically, the value can be measured by using a powder wettability tester "WET-100P (manufactured by Rhesca Corporation)". That is, 50 ml of distilled water is placed in a beaker, and 0.20 g of fine particles to be measured are added to distilled water and dispersed therein with being stirred by a stirrer. The transmittance of the mixed liquid is measured while methanol is dropped from a burette in 2 ml/min, a point where the transmittance of the mixed liquid reaches the minimum value is defined as the end point, and the volume percentage of methanol in the mixture of methanol and distilled water at the point is defined as the degree of hydrophobicity.

If the amount of the thixotropy imparting agent (B) blended in the active energy ray-curable resin composition of the present invention is less than 0.1 parts by weight, the effects of the present invention tend to be hardly exerted, and on the other hand, if the amount is more than 25 parts by weight, the viscosity in the low-shearing region tends to be excessively high to result in the deterioration in workability and also the deterioration in applying appearance. Therefore, the amount of the thixotropy imparting agent (B) blended is preferably 0.1 to 25 parts by weight, more preferably 6 to 15 parts by weight, and further preferably 8 to 13 parts by weight, based on 100 parts by weight of the active energy ray-curable resin (A).

3. Other additives

The active energy ray-curable resin composition for seal materials of the present invention is blended with other additives, if necessary. Examples of other additives include a filling agent, and a polymerization initiator for shortening the curing time by the active energy ray. The filling agent encompasses not only a powdery filling agent but also a flame retardant, a colorant and the like, further specifically, for example, crystalline silica, molten silica, calcium carbonate, talc, mica, alumina, aluminum hydroxide, white carbon, or the like can be applied as the powdery filling agent, and carbon black, expanded graphite powder, powdery graphite, metal fine particles or the like is suitably used for imparting conductivity and antistatic property. Furthermore, a powdery organic halogen compound, red phosphorus, antimony trioxide, expanded graphite, magnetite, aluminum hydroxide or the like can be applied as the flame retardant; a hollow filler

having an organic shell (for example, Expancel (registered trademark) produced by Japan Fillite Co., Ltd.) is suitably used as a cushioning modifier; and any of various pigments and dyes is used as the colorant. Such a filling agent can be appropriately selected and used depending on the application. In addition, as the polymerization initiator, used is a radiation polymerization initiator that is a compound to be exposed to known radiation to generate active radical species. The radiation polymerization initiator includes any initiator that does not remarkably impair the effects of the present invention, but examples of a photo-radical polymerization initiator include α-hydroxyacetophenones, benzyl methyl ketals or α-aminoacetophenones. The radiation polymerization initiator such as an ultraviolet ray polymerization initiator can be used singly or in any combination of two or more in any ratio. Furthermore, when the thixotropy imparting agent has such a property as to shield or absorb the active energy ray, like titanium oxide or zinc oxide, a sensitizer may also be added which promotes resin curability to the active energy ray.

4. Physical properties of active energy ray-curable resin composition for seal materials

In order that the active energy ray-curable resin composition for seal materials of the present invention exerts, as characteristics of the present invention, such remarkable effects that the composition hardly causes diameter expansion (Swell) of the bead-shaped discharged object during needle applying and is high in shape retention property after being applied, and furthermore the bead-shaped discharged object is hardly cut by and is stable against tensile stress at the time of applying, it is important that the apparent viscosity in an uncured state in a shearing speed range from 0.1 to 10 /sec be 50 to 5,000 Pa·s (according to JIS Z8803, cone and plate rotation viscometer, 40°C), and the thixotropic coefficient be 1.1 to 10. The effects of the present invention are hardly achieved out of such ranges. Specifically, in the case where the apparent viscosity is less than 50 Pa·s or the thixotropic coefficient is less than 1.1, the active energy ray-curable resin composition is easily discharged, but excessively flows after being discharged, to be poor in shape retention property, and the case is not preferable. In the case where the apparent viscosity is more than 5,000 Pa·s or the thixotropic coefficient is more than 10, the discharge pressure of the active energy ray-curable resin composition is increased to make discharging difficult, the composition is easily cut by tensile stress at the time of applying and diameter expansion is easily caused, and thus the case is not preferable. Herein, it is preferable that the viscosity and the thixotropic coefficient of the active energy ray-curable resin composition for seal materials of the present invention fall within the above ranges of the viscosity and the thixotropic coefficient when the thixotropy imparting agent (B) is dispersed in the active energy ray-curable resin (A) and then left to stand and the change in viscosity reaches 5% or less/day.

The apparent viscosity of the active energy ray-curable resin composition for seal materials of the present invention is described in detail. The active energy ray-curable resin composition of the present invention includes the thixotropy imparting agent blended therein to exhibit thixotropic property and to exhibit non-Newtonian fluid characteristics. The apparent viscosity in an uncured state of the active energy ray-curable resin composition of the present invention is a value measured according to "viscosity measurement method by cone and plate rotation viscometer" in JIS Z8803 (1991) under a condition of 40°C in a shearing speed range from 0.1 to 10 /sec, and specifically, is preferably a value at a shearing speed of 1.0 /sec measured by linearly and continuously (sweep) changing the shearing speed from 0.1 /sec to 10 /sec for 100 seconds. Herein, the uncured state means a state where the active energy ray-curable resin composition is not irradiated with the active energy ray for curing. From the viewpoints that if the apparent viscosity of the active energy ray-curable resin composition of the present invention is less than 50 Pa·s, the composition excessively flows after being discharged from the needle or the like, to be poor in shape retention property, and if the apparent viscosity is more than 5,000 Pa·s, the composition is hardly discharged from the needle or the like and is easily cut by tensile stress at the time of applying, and diameter expansion is easily caused, the apparent viscosity is preferably 50 to 5,000 Pa·s, more preferably 100 to 2,000 Pa·s, and further preferably 200 to 1,000 Pa·s.

In addition, the thixotropic coefficient is described in detail. The thixotropic coefficient (T.I.) is determined from the apparent viscosity measured according to "viscosity measurement method by cone and plate rotation viscometer" in JIS Z8803 (1991) under a condition of 40°C in a shearing speed range from 0.1 to 10 /sec. Specifically, the thixotropic coefficient is determined by the following expression 1 from an apparent viscosity $\eta$(D1) at a shearing speed $D_1$ and an apparent viscosity $\eta(D_2)$ in a shearing speed $D_2$, measured by a cone and plate rotation viscometer (40°C) according to JIS Z8803, (wherein $0.1\ /sec \leq D_1 < D_2 \leq 10\ /sec$), and particularly preferably a value determined from expression 1 by using such apparent viscosities at a shearing speed $D_1$ of 0.1 /sec and a shearing speed $D_2$ of 1.0 /sec measured by linearly and continuously changing the shearing speed from 0.1 /sec to 10 /sec for 100 seconds. From the viewpoints that if the thixotropic coefficient of the active energy ray-curable resin composition of the present invention is less than 1.1, the composition excessively flows after being discharged from the needle or the like, to be poor in shape retention property, and if the thixotropic coefficient is more than 10, the composition is hardly discharged from the needle or the like and is easily cut by tensile stress at the time of applying, and diameter expansion is easily caused, the thixotropic coefficient is preferably 1.1 to 10, more preferably 1.2 to 5, and further preferably 1.3 to 3.

[Expression 1]

$$T.I. = \frac{\eta(D_1)}{\eta(D_2)}$$

The apparent viscosity and the thixotropic coefficient can be adjusted within the above combination range of the apparent viscosity and the thixotropic coefficient to thereby variously adjust the balance among the dischargeability of the active energy ray-curable resin composition from a coating apparatus such as a needle, the shape retention property of the bead-shaped discharged object, the low diameter expansion property (shape accuracy), and the stability against tensile stress at the time of applying. Specific adjustment examples are as follows: when the active energy ray-curable resin composition is discharged at low pressure for coating, such composition is achieved that the apparent viscosity is adjusted to the lower limit and the thixotropic coefficient is adjusted by blending the thixotropy imparting agent so that the shape of the bead-shaped discharged object coated is held, and on the other hand, when the active energy ray-curable resin composition is discharged at high pressure for coating, the apparent viscosity is adjusted to the upper limit and the thixotropic coefficient is adjusted so that the apparent viscosity is smaller in the high-shearing speed region, thereby suppressing diameter expansion.

In order that the active energy ray-curable resin composition for seal materials of the present invention includes at least the thixotropy **imparting agent (B) made of silica** fine particles, dispersed in the active energy ray-curable resin (A) to provide an active energy ray-curable resin composition exhibiting the apparent viscosity and the thixotropic coefficient described above, the dispersion state of the **silica** fine particles in the active energy ray-curable resin is important. In the present invention, the **silica** fine particles as the thixotropy imparting agent (B) are dispersed in the active energy ray-curable resin (A) so as to exhibit a particle size distribution having a plurality of peaks. Thus, the thixotropic property developed by the network structure of the **silica** fine particles dispersed in the active energy ray-curable resin composition leads to the most suitable state in association with the effects of the present invention. Therefore, there are exerted such remarkable effects that diameter expansion (Swell) of the bead-shaped discharged object is hardly caused, the diameter accuracy of the bead-shaped discharged object is excellent, the shape retention property after applying is high, and the bead-shaped discharged object is hardly cut by and is stable against tensile stress at the time of applying.

The **silica** fine particles as the thixotropy imparting agent (B) exhibiting a particle size distribution having a plurality of peaks in the active energy ray-curable resin (A) are specifically described.

In the present invention, the silica fine particles form aggregated particles formed by the primary particles of the **silica** fine particles aggregated in the active energy ray-curable resin (A), and the aggregated particles exhibit a particle size distribution having a plurality of peaks. That is, the aggregated particles formed by the primary particles of the **silica** fine particles are dispersed while forming aggregated particles of a plurality of different particle diameter ranges. Such aggregated particles include primary aggregated particles formed by the primary particles of the aggregated **silica** fine particles, secondary aggregated particles formed by aggregation of the primary aggregated particles or higher aggregated particles. Specifically, in the case of silica fine particles, the aggregated particle diameter of the primary aggregated particles is preferably 0.05 to 1 μm, and the aggregated particle diameter of the secondary aggregated particles is preferably 1 to 100 μm. Herein, the numeral values of such aggregated particle diameters are each a numeral value based on the laser diffraction/scattering method, but when they are not suitable for the laser diffraction/scattering method, they are each a numeral value obtained by measuring the longest diameters of the respective profiles of aggregated particle images of 1000 fine particles randomly selected in the image at such a magnification that allows the aggregated particles to be visually observed in SEM or TEM (transmission electron microscope), and subjecting them to arithmetic average processing.

Then, the silica fine particles exhibit a particle size distribution (frequency distribution, the same shall apply hereafter) having a plurality of peaks in the active energy ray-curable resin, wherein the plurality of peaks means at least two peaks. The reason for this is because when the particle size distribution of the **silica** fine particles has one peak, the **silica** fine particles are dispersed in the active energy ray-curable resin (A) excessively uniformly to result in ill-balance between the apparent viscosity of the active energy ray-curable resin composition and the thixotropic property developed by the network structure of the **silica** fine particles, not achieving the action effects of the present invention. The particle size distribution of the **silica** fine particles preferably has two or more peaks, more preferably three or more peaks. In addition, the particle size distribution of the **silica** fine particles preferably has peaks in a particle diameter range from 0.05 μm to 100 μm.

In the present invention, each peak in the particle size distribution refers to the top of a mountain or each mountain in the particle size distribution as shown in Figure 1, and the peak area refers to the area of the mountain or such each mountain. The boundary between the peak areas is located at a valley portion (Bottom) on each of both sides of the peak as shown in Figure 1, and when the valley portion at the lower limit of the peak area is at the measurement limit of the particle size distribution and is not clear, the position of the particle diameter at the measurement limit is defined as the valley portion. In Figure 1, while the frequency at the valley portion (relative particle amount: frequency rate in the objective particle diameter section, normalized with the total frequency of the entire frequency distribution being assumed to be 100%) is schematically assumed to be 0%, the frequency at the valley portion is not limited to 0%, and the local minimal value portion between adjacent peaks is referred to as the valley portion (Bottom).

Furthermore, with respect to two or more peaks in the particle size distribution of the **silica** fine particles, the relative particle amount in the particle diameter range having the largest peak area (main peak area) is preferably 30% to 90%, more preferably 35% to 80%, and further preferably 40% to 75%. The reason for this is because if the relative particle amount in the particle diameter range of the main peak area is less than 30% and more than 90%, the balance between the apparent viscosity and the thixotropic property of the resulting active energy ray-curable resin composition may be unstable to reduce the action effects of the present invention.

The particle diameter range having the largest peak area here means a particle diameter range in which the particle diameter of the valley portion at the smaller particle diameter of the largest peak area in the particle size (frequency) distribution is defined as the lower limit, and the particle diameter of the valley portion at the larger diameter of the largest peak area is defined as the upper limit, as shown in Figure 1. In addition, the relative particle amount (%) in the particle diameter range having the largest peak area (main peak area) means the rate of the particle size (frequency) in the particle diameter range having the largest peak area (main peak area) accounted for in 100% of the particle size (frequency) of the entire particle size distribution. This relative particle amount is obtained from a cumulative distribution Q of the relative particle amount (undersize cumulative distribution in an example in Figure 2) as a difference (N1 - N2) between relative particle amounts (cumulative) N1 and N2 of the cumulative distribution Q, which are corresponding respectively the upper limit particle diameter and the lower limit particle diameter of the peak area in a frequency distribution P, for example, as shown in Figure 2.

Furthermore, the particle diameter range having the largest peak area (main peak area) preferably includes a smaller particle diameter than a particle diameter range having other peak area (sub-peak area), and the particle diameter at the peak (main peak) in the main peak area is preferably 0.05 to 1 μm and more preferably 0.08 to 0.3 μm from the viewpoint that the dischargeability, the reduction in diameter expansion (Swell) of the bead-shaped discharged object, the stability at the time of applying and the shape retention property after applying can be realized in a well-balanced manner.

5. Method for producing active energy ray-curable resin composition for seal materials

The active energy ray-curable resin composition for seal materials of the present invention is produced by blending at least the thixotropy imparting agent (B) in an amount of 0.1 to 25 parts by weight in 100 parts by weight of the active energy ray-curable resin (A), and dispersing them so that the apparent viscosity (according to JIS Z8803, cone and plate rotation viscometer) in a shearing speed range from 0.1 to 10 /sec is 50 to 5,000 Pa·s at 40°C and the thixotropic coefficient is 1.1 to 10. In order to achieve the action effects of the present invention, the ratio of the active energy ray-curable resin (A) to the thixotropy imparting agent (B) blended and the dispersion state of the thixotropy imparting agent (B) in the active energy ray-curable resin (A) are important, and among them, the dispersion state is particularly important. As shown in Figure 3, a process of producing the active energy ray-curable resin composition for seal materials of the present invention preferably includes (i) blending step S1 and (ii) dispersion step S2 and furthermore (iii) aging step S3. Hereinafter, each of the steps will be described with reference to Figure 3 and Figure 4.

Blending step S1 shown in Figure 3 is a step of blending the active energy ray-curable resin (A) and at least the thixotropy imparting agent (B). As the thixotropy imparting agent (B), the silica fine particles are used. The thixotropy imparting agent (B) is blended depending on physical properties such as the viscosity of the active energy ray-curable resin (A) in a range from 0.1 to 25 parts by weight based on 100 parts by weight of the active energy ray-curable resin (A). For example, when a different active energy ray-curable resin is used to design an active energy ray-curable resin composition for seal materials, having the same apparent viscosity and thixotropic coefficient, only as a guide, the ratio of the thixotropy imparting agent (B) blended may be made larger when the viscosity of the active energy ray-curable resin (A) is low, and on the contrary, the ratio of the thixotropy imparting agent (B) blended may be made smaller when the viscosity of the active energy ray-curable resin (A) is high. Herein, since the apparent viscosity and the thixotropic coefficient of the resulting active energy ray-curable resin composition are changed depending on the dispersion state of the thixotropy imparting agent (B) in the active energy ray-curable resin (A), the ratio of the thixotropy imparting agent (B) blended is adjusted depending on the setting of the dispersion state thereof based on the above guide. In addition, an additive such as a pigment, a filling agent or a polymerization initiator is also preferably blended in blending step S1.

Then, dispersion step S2 shown in Figure 3 is described. In dispersion step S2, it is important that the silica fine particles, as the thixotropy imparting agent (B) be dispersed in the active energy ray-curable resin in neither excessively dispersed nor insufficiently dispersed state but in the specified dispersed state. With respect to such dispersed state, preferably, a particle size distribution, in the state where aggregated particles by aggregation of the primary particles of silica fine particles are dispersed in the active energy ray-curable resin (A), has at least two peaks in a particle diameter range of the aggregated particles is 0.05 to 100 μm, more preferably, the relative particle amount in the particle diameter range having the largest peak area (main peak area) is 30% to 90%, further preferably, the relative particle amount is 35% to 80%, and particularly preferably, it is 40% to 75%. In the dispersion treatment in dispersion step S2, a known dispersion procedure or method such as an ultrasonic dispersion method, a dissolver method or a roll dispersion method can be applied. Among them, an ultrasonic dispersion method may result in the reduction in storage stability of the resulting active energy ray-curable resin composition, a dissolver method may cause an influence on the curing mechanism of an active energy ray-curable resin due to temperature rise, and thus the dispersion treatment is preferably performed by a roll dispersion method.

In addition, dispersion step S2 may be performed with being divided into preliminary dispersion step S2a of performing rough dispersion and main dispersion step S2b of performing dispersion until the intended dispersion state is achieved, as shown in Figure 4, and for example, a combination of different procedures, in which preliminary dispersion step S2a is performed by a dissolver method and main dispersion step S2b is performed by a roll dispersion method, can also be effectively applied. Furthermore, main dispersion step S2b may also be carried out after a dispersion master batch including the active energy ray-curable resin (A) and the thixotropy imparting agent (B) is prepared in advance and, in order to achieve a predetermined composition, the active energy ray-curable resin (A) and/or the thixotropy imparting agent (B) are added and dispersed/mixed to such an extent that they are adjusted in terms of blending to be compatible with each other in preliminary dispersion step S2a. The dispersion treatment conditions are appropriately adjusted depending on a combination of the properties (primary particle diameter, particle size distribution of primary particles, and formation state of aggregated particles) of the **silica** fine particles as the thixotropy imparting agent to be used, and the amount thereof blended, with the properties of the active energy ray-curable resin (type and viscosity), thereby providing the intended dispersion state.

Furthermore, dispersion step S2 (S2a and S2b) is described in detail. Dispersion step S2 or main dispersion step S2b is not particularly limited. When an object to be dispersed is dispersed using a three-roll mill having a roll diameter of 50 to 70 mm, the dispersion treatment is preferably performed until particles of 50 μm or more disappear when being measured by a grind gauge, under conditions of, for example, a gap between rolls of 15 to 95 μm, a feed roll rotation number of 50 to 100 rpm, an intermediate roll rotation number of 150 to 200 rpm, an apron roll rotation number of 300 to 600 rpm and a number of passes of 1 to 5 times, wherein the gap between rolls is more preferably 35 μm to 75 μm. The dispersion treatment is performed under such conditions to thereby provide an active energy ray-curable resin composition for seal materials in the desired dispersion state. In addition, when the object to be dispersed is dispersed using a three-roll mill having a roll diameter of 150 to 250 mm, the dispersion treatment is preferably performed until particles of 50 μm or more disappear when being measured by a grind gauge, under conditions of a gap between rolls 3 to 75 μm, a feed roll rotation number of 10 to 50 rpm, an intermediate roll rotation number of 50 to 100 rpm, an apron roll rotation number of 150 to 250 rpm and a number of passes of 1 to 10 times, wherein the gap between rolls is more preferably 3 μm to 50 μm. In addition, the number of passes is further preferably two or more times. The dispersion treatment is performed under such conditions to thereby provide an active energy ray-curable resin composition for seal materials in the desired dispersion state. Furthermore, preliminary dispersion step S2a is not particularly limited. When the object to be dispersed is dispersed using a rotating and revolving mixer, preliminary dispersion step S2a can be performed by dispersing the object to be dispersed in a rotation number of 1000 to 3000 rpm for about 1 to 10 minutes.

When hydrophobic **silica** fine particles, in which the hydrophilic surface is subjected to a hydrophobizing treatment, are used as the thixotropy imparting agent (B) in dispersion step S2 (S2a and S2b), a layer subjected to a hydrophobizing treatment, on the surface of the **silica** fine particles, may be partially broken by shear stress applied in the dispersion treatment using a roll dispersion method or the like to allow the original hydrophilic surface to be partially exposed, and the main hydrophobic surface and the partially hydrophilic surface of the hydrophobic **silica** fine particles used can be cooperated to enhance the characteristic action effects of the present invention. While the partially hydrophilic surface of the hydrophobic **silica** fine particles may be formed before the fine particles are dispersed in the active energy ray-curable resin, the partially hydrophilic surface is preferably formed on the course of dispersing the hydrophobic **silica** fine particles in the active energy ray-curable resin by shear stress at the time of the dispersion treatment, as described above, because the initial dispersibility of the **silica** fine particles in the active energy ray-curable resin which is hydrophobic is deteriorated. Such a mechanism that the partially developed hydrophilicity of the hydrophobic **silica** fine particles enhances the action effects of the present invention is not currently clear, but it is presumed as follows: for example, colloidal hydrophobic silica has about 70% of silanol groups on the silica surface, substituted with methyl groups, the primary particles thereof form primary aggregated particles by the remaining silanol groups, and furthermore

the primary aggregated particles aggregate to form secondary aggregated particles; when this colloidal hydrophobic silica is dispersed in the active energy ray-curable resin, the dispersion performed by only a blade-type stirrer allows the secondary aggregated particles of the colloidal hydrophobic silica to further aggregate to thereby form a network structure, resulting in the deteriorations in dispersibility and fluidity in the active energy ray-curable resin, but the dispersion performed by a three-roll dispersion method in which a gap is set to 1 $\mu$m to 300 $\mu$m produces a strong shear stress by a space between rolls to thereby allow the most of the secondary aggregated particles of the colloidal hydrophobic silica to be ground to produce the primary aggregated particles and to partially expose hydrophilic silanol groups (about 30%) remaining on the surface of the primary particles; therefore, the network structure of the colloidal hydrophobic silica particles is promoted to form a denser network structure than the network structure of the secondary aggregated particles.

Then, aging step S3 is described. Aging step S3 is a step of leaving the active energy ray-curable resin composition to stand for aging in order to stabilize the apparent viscosity and the thixotropic coefficient of the composition for a period from dispersing of the thixotropy imparting agent in the active energy ray-curable resin to achieving compatibility of the active energy ray-curable resin with the thixotropy imparting agent. The aging period varies depending on the properties of the active energy ray-curable resin composition, but is preferably set to one week or longer only as a guide. In aging step S3, an active energy ray-curable resin composition for seal materials is obtained in which a network structure of fine particles, contributing to the action effects of the present invention, is stably formed and which has preferable apparent viscosity and thixotropic coefficient. After aging step S3, since the change in rheology (viscosity and thixotropic property) over time is extremely small, it is not necessary to adjust discharge processing conditions of the active energy ray-curable resin composition depending on the change in rheology over time, contributing to the enhancement in discharge processing stability.

6. Container in which active energy ray-curable resin composition for seal materials is filled

The active energy ray-curable resin composition for seal materials of the present invention is used for seal material formation as an aspect in which the composition is filled in a container. The container in the present invention means a container, in which the active energy ray-curable resin composition for seal materials of the present invention is filled or encapsulated, sold as "a container in which the active energy ray-curable resin composition for seal materials is filled or encapsulated", and examples thereof include a syringe and a tube. Therefore, the container in the present invention is provided with a fluid-receiving portion, a fluid injection portion, a fluid ejection portion, a piston and an impeller for injecting/ejecting a fluid, a cap or a seal, and the like, and includes a container having a function that can store a fluid, and that can inject and/or eject the fluid in any amount. While this container, in which a needle-shaped coating part capable of discharging the fluid in a bead shape is further mounted, is used, the container may be installed to a needle-shaped coating part in advance or may be formed therewith in an integrated manner. Furthermore, when the active energy ray-curable resin is an ultraviolet ray-curable resin, a light-blocking container is preferably adopted in order to prevent the curing by an ultraviolet ray as natural light.

The container in which the active energy ray-curable resin composition for seal materials is filled may be provided with those selected from a fluid injection portion, a fluid ejection portion, a piston and an impeller for injecting or ejecting a fluid, a cap and a seal, and the like, and an injector type container or a tube type container is most frequently used. Examples of the tube type container include various containers such as a container having a fluid injection portion and a fluid ejection portion, a container having only one port for both of injection and ejection of a fluid, a container initially having a fluid injection portion and a fluid ejection portion and, after injection of a fluid, having only the fluid ejection portion remaining with the fluid injection portion being closed, a container initially having a fluid injection portion and a fluid ejection portion and, after injection of a fluid, having the both portions closed, and a container in which a measure for closing a fluid injection portion and a fluid ejection portion is selected from a plug, a cap with a rotation groove, heat sealing, seal-pasting, or the like. Herein, the container may be provided with a heating measure, a cooling measure, a pressure reduction measure, a pressurizing measure, a suction measure, a evaporating measure, a motor, a hydraulic measure, a pneumatic measure, a metering measure, a dust prevention measure, a handling assist measure, a display measure, a generated gas emission measure, a backflow prevention measure, a temperature detection measure, or the like.

7. Method for producing container in which active energy ray-curable resin composition for seal materials is filled

The container in which the active energy ray-curable resin composition for seal materials of the present invention is filled is produced by filling the active energy ray-curable resin composition in the container by a known filling machine, and if necessary, removing air bubbles by a defoaming measure. When the active energy ray-curable resin composition for seal materials is filled, such filling is preferably performed before the aging step because the apparent viscosity of the active energy ray-curable resin composition is easily increased after the aging step.

8. Seal material using active energy ray-curable resin composition and method for producing the same

The method for producing a seal material using the active energy ray-curable resin composition of the present invention is described with reference to Figure 5 to Figure 8. As shown in Figure 7, the method for producing a seal material of the present invention is configured mainly from bead-shaped discharged object formation step S11 of discharging the active energy ray-curable resin composition for seal materials S10, prepared as described above, from the needle-shaped coating part by the pressurizing measure in a bead shape to form a bead-shaped discharged object, and curing step S12 of irradiating the bead-shaped discharged object with the active energy ray substantially at the same time with or after the formation of the bead-shaped discharged object, for curing.

The method for producing a seal material is described in detail with reference to Figure 5 as an example. Figure 5 (a) illustrates a front view of a coating apparatus 9 for producing a bead-shaped seal material 1, and Figure 5(b) illustrates a right side view thereof. As illustrated in such Figure 5(a) and Figure 5(b), a container 5 in which the active energy ray-curable resin composition for seal materials of the present invention is filled is mounted to a three-dimensional applying apparatus 9 that can control the transfer in X-Y-Z-axis directions. In the present embodiment, high pressure air as a pressurizing measure is supplied to the container 5 via a pressure air supply pipe 90. As illustrated in Figure 5(a) to Figure 5(c), the container 5, provided with a needle-shaped coating part 4, discharges the active energy ray-curable resin composition for seal materials from the needle-shaped coating part 4 provided at the lower end of the container 5 to the surface of a substrate for application 20 disposed on a sample stand (stage) B, in a bead shape, while being transferred according to a seal-shaped drawing pattern programmed in the three-dimensional applying apparatus 9 in advance, thereby forming a bead-shaped discharged object 10. Then, the bead-shaped discharged object 10 is irradiated with the active energy ray from an active energy ray irradiation unit 8 to crosslink the active energy ray-curable resin composition for seal materials, for forming the bead-shaped discharged object 10, thereby curing the bead-shaped discharged object 10 to provide a seal material 1. While a pressure air system by high pressure air is exemplified as the pressurizing measure for discharging the active energy ray-curable resin composition for seal materials from the needle-shaped coating part 4 of the container 5 in Figure 5, a known system such as a hydraulic pressure system or a gear pump system can be applied. In addition, while the bead-shaped discharged object 10 can be cured by irradiation with the active energy ray at any time after discharging, it is preferably cured substantially at the same time with the discharging from the needle-shaped coating part 4 for forming the bead-shaped discharged object from the viewpoint of retaining the shape of the bead-shaped discharged object 10. In addition, when a higher seal material is produced, coating may be performed twice so that a bead-shaped discharged object is stacked on the bead-shaped discharged object formed, forming the bead-shaped discharged object 10 in a two-step manner.

In addition, as illustrated in Figure 6(a) to Figure 6(h), the diameter cross section shape of the discharge port of the needle-shaped coating part for forming the seal material can be any shape such as a round shape, an elliptical shape, a trapezoidal shape, a quadrilateral shape, a snowman-like shape, and a horseshoe-like shape depending on the application. For example, when the adhesiveness to the substrate for application and the low deformability under stress are demanded, a horseshoe-like shape illustrated in Figure 6(c) is preferable, and furthermore, when the height of the seal material is demanded, the cross section shape may be a trapezoidal shape or a quadrilateral shape having a large height/width ratio. Since the active energy ray-curable resin composition for seal materials of the present invention is excellent in shape accuracy and shape retention property before curing, it can easily form a seal material having a cross section shape having a large height/width ratio. Herein, the horseshoe-like shape representatively means a shape in Figure 6(c), wherein the shape, whose circular arc is partially linear, has the diameter (short diameter or long diameter) portion of a round shape (elliptical shape). Furthermore, the inner diameter of the discharge port of the needle-shaped coating part (in the case of round shape) can be appropriately selected depending on the application, an inner diameter of 1 mm or less allows the superiority of the action effects of the present invention to be further exerted as compared with the prior art, and more preferably an inner diameter of 0.75 mm or less, further preferably an inner diameter of 0.5 mm or less, allows the action effects to be remarkably exerted.

In curing step S12 shown in Figure 7, as the amount of the active energy ray with which the bead-shaped discharged object made of the active energy ray-curable resin composition for seal materials is irradiated (accumulated light amount) is higher to cure the object in a shorter time, a seal material having a shape closer to that of the bead-shaped discharged object at the time of discharging can be obtained. As other embodiment according to curing step S12, curing step S12 can also be configured from preliminary irradiation step S12a of intentionally producing a semi-cured state, and main irradiation step S12c of subsequently producing such a cured state that the degree of crosslinking is 90% or more, as shown in Figure 8. While preliminary irradiation step S12a may be initiated before the bead-shaped discharged object formed in bead-shaped discharged object formation step S11 is brought into contact with the substrate for application or after the bead-shaped discharged object is brought into contact with the substrate for application, it is preferably initiated before the object is brought into contact with the substrate for application from the following reason. That is, since the bead-shaped discharged object preliminarily irradiated with the active energy ray in preliminary irradiation step S12a before being brought into contact with the substrate for application is brought into contact with and

stuck to the substrate for application while retaining the shape of the bead-shaped discharged object and having proper stickiness for the semi-cured surface, and then cured in main irradiation step S12c, the seal material can have higher adhesiveness to the substrate for application while keeping the shape accuracy thereof. Therefore, such failures as position displacement and separation of the seal material due to vibration or impact during subsequent handling and transfer operations can be avoided. Furthermore, there is an effect of preventing dusts from being attached.

As shown in Figure 8, intermediate processing step S12b of allowing the bead-shaped discharged object to partially flow for change in shape (secondary shape processing before main irradiation) can also be added between preliminary irradiation step S12a and main irradiation step S12c. When preliminary irradiation step S12a is initiated in the state where the bead-shaped discharged object is in contact with the substrate for application, intermediate processing step S12b may be conducted at the same time with preliminary irradiation step S12a or before preliminary irradiation step S12a is initiated. These methods, in which the angular portion such as a trapezoidal shape or a quadrilateral shape is rounded to be provided with chamfering in intermediate processing step S12b, thus have an effect of easily deforming the seal material in use. As another embodiment, when the active energy ray-curable resin composition is discharged so that the line diameter cross section has a round shape, and then cured as it is, the line diameter cross section has a substantially round shape, but when the resin composition is main cured after being left to stand in the state where only the bottom surface is deformable or being semi-cured with preliminary irradiation so that the contact area with the substrate for application is intentionally increased, a bead-shaped seal material that easily exhibits a horseshoe-like shaped line diameter cross section can also be obtained. As a measure for affording the change in shape by flowing in intermediate processing step S12b, deformation under its own weight may be adopted, or application of minute vibration may be adopted. Herein, intermediate processing step S12b is not an essential constituent and can be performed if necessary, and the curing step may also be configured from only preliminary irradiation step S12a and main irradiation step S12c.

The light amount of the active energy ray irradiation can be appropriately adjusted as the accumulated light amount depending on the coating condition, the properties of the bead-shaped discharged object, and the like, and specifically, the accumulated light amount in preliminary irradiation step S12a of semi-curing the bead-shaped discharged object is preferably a light amount that is 1 to 50% based on the accumulated light amount for substantially completely curing the bead-shaped discharged object (the degree of crosslinking is 90% or more), from the viewpoint of the balance between shape retention and surface stickiness. The reason for this is because more reliable adhesiveness is achieved because if the accumulated light amount in preliminary irradiation step S12a is more than 50% based on the accumulated light amount for substantially completely curing the object, the shape accuracy of the seal material is enhanced, but the adhesiveness between the substrate for application and the seal material after complete curing is deteriorated.

The conditions involving in the shape of the bead-shaped seal material of the active energy ray-curable resin composition for seal materials are the discharge speed from the needle and the transfer speed of the needle (accurately, the transfer speed of the discharge port of the needle coating part) at the time of coating in bead-shaped discharged object formation step S11. The discharge speed of the active energy ray-curable resin composition from the discharge port of the needle coating part is appropriately adjusted by the apparent viscosity and the thixotropic coefficient of the active energy ray-curable resin composition. Since the discharge speed depends on the discharge pressure, an excessively high discharge speed (discharge pressure) allows the bead-shaped discharged object to be twisted or vibrated at the time of discharging, easily causing failures such as unstable discharge state and large diameter expansion (swell). In addition, while the transfer speed of the needle is appropriately adjusted by the balance with the discharge speed, a higher transfer speed than the discharge speed increases the tensile stress applied to the bead-shaped discharged object discharged on the substrate for application, between the bead-shaped discharged object and the needle discharge port, but the active energy ray-curable resin composition for seal materials of the present invention is more stable and thus the transfer speed can be higher than that in a conventional object. In addition, by taking an advantage of the stability, the transfer speed of the needle can be higher than the discharge speed of the active energy ray-curable resin composition to intentionally add the tensile stress to the bead-shaped discharged object before the bead-shaped discharged object is brought into contact with the substrate for application, thereby reducing the line diameter of the bead-shaped discharged object and forming a seal material having a smaller diameter than the discharge diameter. In this case, the bead-shaped discharged object can be preliminarily irradiated when the line diameter is reduced, to thereby stabilize the line diameter of the bead-shaped discharged object while the bead-shaped discharged object is prevented from being disconnected.

9. Seal structure into which active energy ray-curable resin composition for seal materials is incorporated

With reference to Figure 9 to Figure 10, a seal structure 3 into which the active energy ray-curable resin composition of the present invention is incorporated is described. The seal structure 3 according to the present embodiment has, as a basic structure, a structure in which a bead-shaped seal material 1 is sandwiched between a first substrate to be sealed (substrate for application) 20 and a second substrate to be sealed 21, as illustrated in Figure 9. The seal

structure 3 is obtained by, for example, forming the bead-shaped seal material 1 made of the active energy ray-curable resin composition for seal materials of the present invention on a working surface (surface to be sealed) of the first substrate to be sealed (substrate for application) 20 by the method for producing a seal material, and pressing and approximating a working surface (surface to be sealed) of the second substrate to be sealed 21 to the working surface of the first substrate to be sealed 20 while the bead-shaped seal material 1 being sandwiched therebetween to be deformed. Thus, a reliable sealing performance can be realized even in the minimum seal area. In the present embodiment, while an example where the bead-shaped seal material 1 is formed on the first substrate to be sealed 20 is described, the bead-shaped seal material 1 may be formed on the second substrate to be sealed 21, or the bead-shaped seal material 1 may be formed on both of the first substrate to be sealed 20 and the second substrate to be sealed 21. In addition, the seal structure 3 is not limited to such a structure in Figure 9, in which the bead-shaped seal material 1 is sandwiched between both of the two substrates to be sealed 20 and 21 while being in contact therewith, and as other embodiment, a one surface opening structure as illustrated in Figure 10(a) can also be adopted in which the bead-shaped seal material 1 is in contact with only one of the substrates to be sealed. The seal structure 3 illustrated in Figure 10(a) is a one surface opening structure in which the bead-shaped seal material 1 is formed on the first substrate to be sealed 20, and has a function of exerting seal property and cushioning property by the bead-shaped seal material 1 in contact with the proximal second substrate to be sealed 21 as illustrated in Figure 10(b).

10. Application of active energy ray-curable resin composition for seal materials

The active energy ray-curable resin composition for seal materials of the present invention is mainly suitably used in an application in which the composition is discharged from the needle-shaped coating part to the substrate for application in a bead shape to be brought into contact with the substrate, and the bead-shaped discharged object obtained is irradiated with the active energy ray for curing to form a bead-shaped seal material. The bead-shaped seal material can be suitably applied as a bead-shaped seal material that is arranged between at least two acting members to exert various functions such as waterproof property, dust resistance, cushioning property, vibration-proofing property, vibration-damping property, stress relaxation property, gap complementary property, backlash resistance, slippage resistance, and collision noise reduction property. In addition, the active energy ray-curable resin composition for seal materials of the present invention can be applied to not only the application in which the resin composition is arranged between two acting members but also a structure in which the resin composition is arranged on one acting member. The resin composition is effective for an application in which a plurality of bead-shaped seal materials are arranged on the surface of a case to exert a cushioning action at the time of collision of an external impact object, or an application adopted in a structure for exerting seal property and cushioning property at the time of approximating of a corresponding member and used in the form of one surface opening, as illustrated in Figure 10.

Examples

Hereinafter, the present invention will be specifically described by Examples, but the present invention is not particularly limited to these Examples.

Components and product names of the active energy ray-curable resin (A), and components and product names of the thixotropy imparting agent (B), used in each of the following Examples and Comparative Examples, are shown in Table 1 and Table 2, respectively.

[Table 1]

| NO. | Type of component | Viscosity [Pa·s] | Maker, Product name |
|---|---|---|---|
| A-1 | UV-curable silicone-based resin | 3 | produced by Shin-Etsu Chemical Co., Ltd., X-31-7045-R |
| A-2 | UV-curable silicone-based resin | 6 | produced by Momentive Performance Materials Inc., TUV6000 |
| A-3 | UV-curable silicone-based resin | 1 | produced by Momentive Performance Materials Inc., TUV6001 |
| A-4 | UV-curable silicone-based resin | 17 | produced by Momentive Performance Materials Inc., TUV6020 |
| A-5 | UV-curable urethane-based resin | 150 | produced by Dic Corporation, UV-3700B |

(continued)

| NO. | Type of component | Viscosity [Pa·s] | Maker, Product name |
|---|---|---|---|
| A-6 | UV-curable acrylic resin | 0.3 | produced by Gluelabo Ltd., GL6007V |

[Table 2]

| NO. | Type of component | BET specific surface area ($m^2/g$) | BET particle diameter* (nm) | Maker, Product name |
|---|---|---|---|---|
| B-1 | Hydrophobic silica fine particle | 120 | 23 | produced by Wacker Asahikasei Silicone Co., Ltd., HDK H15(HDK: registered trademark) |
| B-2 | Hydrophobic silica fine particle | 300 | 9 | produced by Evonik Industries, AEROSIL R976(AEROSIL: registered trademark) |
| B-3 | Hydrophilic silica fine particle | 125 | 22 | produced by Wacker Asahikasei Silicone Co., Ltd., hydrophilic silica, HDK S13(HDK: registered trademark) |
| * particle diameter value calculated with the BET where the particle is assumed as a perfect sphere and a smooth surface with a specific density of 2.2 | | | | |

The measurement methods of the physical properties and the evaluation methods of the effects in the following Examples and Comparative Examples are as follows.

(1) Apparent viscosity

The apparent viscosity was determined as a measurement value at a shearing speed of 1.0 /sec measured by linearly and continuously changing (sweeping) the shearing speed from 0.1 /sec to 10 /sec for 100 seconds at 40°C using a dynamic viscoelastic measurement instrument (ARES RDA manufactured by TA Instruments Japan) according to JIS Z8803 (cone and plate rotation viscometer).

(2) Thixotropy property (thixotropic coefficient)

The thixotropic coefficient is determined by using the above expression 1 based on the apparent viscosity at a shearing speed of 0.1 /sec and the apparent viscosity at a shearing speed of 1.0 /sec measured by linearly and continuously changing (sweeping) the shearing speed from 0.1 /sec to 10 /sec for 100 seconds at 40°C using a dynamic viscoelastic measurement instrument (manufactured by TA Instruments Japan ARES RDA) according to JIS Z8803 (cone and plate rotation viscometer).

(3) Dispersion state of **silica** fine particles

In order to evaluate the dispersion state of the **silica** fine particles, an active energy ray-curable resin composition in each Example was produced which was prepared under the same amounts blended and the same conditions except that no pigment was blended. The particle size distribution of the **silica** fine particles in the active energy ray-curable resin composition produced was measured using a laser diffraction type particle size distribution measurement apparatus (Shimadzu Corporation SALD-7100H, light source: bluish purple diode laser, 405 nm) loaded with a high concentration sample measurement system (Shimadzu Corporation SALD-HC71H). The measurement was made by filling a 0.1 mm recessed cell or a 0.5 mm recessed cell with the active energy ray-curable resin composition produced in the no-adjustment (stock solution) state, then placing the resultant on a glass slide to provide a sample cell, and setting the cell on the measurement part of the laser diffraction type particle size distribution measurement apparatus. The number of peaks in the resulting particle size distribution, the particle diameter at the peak in the particle diameter range having the largest peak area (main peak area), the particle diameter at the peak in the particle diameter range having the second largest peak area (sub-peak area 1), the particle diameter at the peak in the particle diameter range having the third largest peak area (sub-peak area 2), and the relative particle amount (%) in the particle diameter range having the main peak area were confirmed.

(4) Effect of reducing diameter expansion (swell) of bead-shaped discharged object

A light-shielding syringe on which a needle, whose inner diameter cross section shape (discharge port diameter) was a round shape, having an inner diameter of 0.5 mmφ or 1 mmφ was mounted was filled with the active energy ray-curable resin composition produced in each Example. An air pressure-operated dispensing apparatus (discharge controller: Model ML-808FXcom manufactured by Musashi Engineering, Inc., three-dimensionally controlled robot part: Model Shotmaster 200DS) accompanied with an ultraviolet ray irradiation apparatus was used to apply an air pressure of 400 kPa, thereby discharging each of the active energy ray-curable resin compositions from the needle to form a bead-shaped discharged object, and simultaneously to subject the object to UV irradiation for forming a bead-shaped cured product. The cross section outer diameter of the bead-shaped cured product was measured by a microscope (MM-800/LFA manufactured by Nikon Corporation, magnification: 20-fold), and evaluated as the ratio $OD_b/ID_n$ of the outer diameter $OD_b$ of the bead-shaped cured product to the discharge needle inner diameter $ID_n$ (the ratio closer to 1 means the effect of reducing Swell is larger and the diameter accuracy is more excellent).

(5) Cutting difficulty and stability at the time of needle applying of bead-shaped discharged object

A light-shielding syringe on which a needle, whose inner diameter cross section shape (discharge port diameter) was a round shape, having an inner diameter of 0.5 mmφ or 1 mmφ was mounted was filled with the active energy ray-curable resin composition produced in each Example. An air pressure-operated dispensing apparatus (discharge controller: Model ML-808FXcom manufactured by Musashi Engineering, Inc., three-dimensionally controlled robot part: Model Shotmaster 200DS) accompanied with an ultraviolet ray irradiation apparatus was used to discharge each of the active energy ray-curable resin compositions from the needle at 16 mm/s and transfer the needle parallel with the surface of the substrate for application at a speed of 25 mm/s, forming a bead-shaped discharged object having a pattern illustrated in Figure 11. The variation in line diameter of the bead-shaped discharged object and the presence of disconnection of the bead-shaped discharged object were visually checked and evaluated. The evaluation criteria were as follows: a composition whose bead-shaped discharged object was disconnected, or a composition in which the variation in the line diameter was remarkable was rated as "Bad" (failing); and a composition other than them was rated as "Good" (passing).

(6) Dischargeability (coatability)

During the evaluation of the cutting difficulty and the stability at the time of needle applying of the bead-shaped discharged object in (5), the dischargeability was evaluated together. The evaluation criteria were as follows: a composition, where the active energy ray-curable resin composition produced in each Example was dischargeable from the needle at 16 mm/s by application of an air pressure of 400 kPa, was rated as "Good" (Good); a composition which was dischargeable, but the discharge speed was lower than the needle transfer speed (25 mm/s), and whose bead-shaped discharged object was easily expanded was rated as "Fair" (Acceptable); and a composition in which the discharge speed was remarkably low or which was hardly discharged was rated as "Bad" (Unacceptable).

(7) Shape retention property of bead-shaped discharged object (uncured state)

A light-shielding syringe on which a needle, whose inner diameter cross section shape (discharge port diameter) was a round shape, having an inner diameter of 0.5 mmφ was mounted was filled with the active energy ray-curable resin composition produced in each Example. An air pressure-operated dispensing apparatus (discharge controller: Model ML-808FXcom manufactured by Musashi Engineering, Inc., three-dimensionally controlled robot part: Model Shotmaster 200DS) accompanied with an ultraviolet ray irradiation apparatus was used to discharge each of the active energy ray-curable resin compositions from the needle at the same discharge speed as the transfer speed of the needle, forming a bead-shaped discharged object on a glass plate (soda glass manufactured by Hiraoka Special Glass Mfg. Co., Ltd.). The bead-shaped discharged object was naturally left to stand for 30 seconds, and the change in shape of the bead-shaped discharged object (degree of drooping) was observed. The evaluation criteria were as follows: when the width and the height of the bead-shaped discharged object were measured using a microscope (MM-800-LFA manufactured by Nikon Corporation), a ratio (height/width) of the lineheight to the linewidth of 0.9 to 1 was rated as "Excellent" (Excellent), 0.8 to less than 9 was rated as "Good" (Good), 0.5 to less than 0.8 was "Fair" (Acceptable), and less than 0.5 was rated as "Bad" (Unacceptable).

[Example 1]

An active energy ray-curable resin composition of the present Example was prepared by the following procedure,

and the measurement of the physical properties and the evaluation of the effects were performed. To 100 parts by weight of active energy ray-curable resin A-1 shown in Table 1 were 0.1 parts by weight of thixotropy imparting agent B-1 shown in Table 2, and 0.1 parts by weight of a blue coloring pigment as an additional additive (KE-Color MB produced by Shin-Etsu Chemical Co., Ltd.) added thereto. A rotating and revolving mixer (AR-250 manufactured by Thinky) was used to perform preliminary dispersion at a rotation number of 2000 rpm for 3 minutes. Then, a preliminarily dispersed product was subjected to a dispersion treatment as the main dispersion step by using a three-roll mill (Model RM-1S manufactured by Irie Shokai Co., Ltd.) under conditions of a roll diameter of 63.5 mm, a gap between rolls of 55 μm, a feed roll rotation number of 70 rpm, an intermediate roll rotation number of 170 rpm, an apron roll rotation number of 420 rpm and a number of passes of 3 times until particles of 50 μm or more disappeared when being measured by a grind gauge, providing an active energy ray-curable resin composition. A part of the resulting active energy ray-curable resin composition was filled in a light-shielding syringe (PSY-50EU manufactured by Musashi Engineering, Inc.) by using a filling machine (self-manufactured pressure filling machine) to prepare a container in which the active energy ray-curable resin composition is filled, and the container was used as a sample for evaluation of the effect of reducing diameter expansion of a bead-shaped discharged object, stability at the time of needle applying, dischargeability, and the shape retention property of a bead-shaped discharged object. On the other hand, the remaining active energy ray-curable resin composition that was not filled in the light-shielding syringe was used as a sample for measurement for evaluation of the apparent viscosity, the thixotropic coefficient, the viscoelastic modulus and the dispersion state of the **silica** fine particles. Herein, a sample prepared under the same blending and the same conditions except that the blue coloring pigment was omitted was prepared as a sample for evaluation of the dispersion state of the **silica** fine particles. Then, as the aging step of the active energy ray-curable resin composition, the container in which the active energy ray-curable resin composition was filled and the sample for measurement of the apparent viscosity and the like were subjected to defoaming under reduced pressure, and then left to stand at room temperature for 200 hours for aging, providing the active energy ray-curable resin composition of the present Example. The sample for evaluation and the sample for measurement of the resulting active energy ray-curable resin composition were used to perform the evaluation of the physical properties and the evaluation of the effects.

[Examples 2 to 5]

Each of active energy ray-curable resin compositions in Examples 2 to 5 was obtained in the same manner as in Example 1 except that the blending of active energy ray-curable resin A-1 shown in Table 1 and thixotropy imparting agent B-1 shown in Table 2 in Example 1 was changed as shown in Table 3. The sample for evaluation and the sample for measurement of each of the resulting active energy ray-curable resin compositions were used to perform the evaluation of the physical properties and the evaluation of the effects.

[Example 6]

An active energy ray-curable resin composition in Example 6 was obtained in the same manner as in Example 3 except that active energy ray-curable resin A-2 was used instead of A-1 shown in Table 1 in Example 3. The sample for evaluation and the sample for measurement of the resulting active energy ray-curable resin composition were used to perform the evaluation of the physical properties and the evaluation of the effects.

[Example 7]

An active energy ray-curable resin composition in Example 7 was obtained in the same manner as in Example 2 except that thixotropy imparting agent B-2 was used instead of B-1 shown in Table 2 in Example 2. The sample for evaluation and the sample for measurement of the resulting active energy ray-curable resin composition were used to perform the evaluation of the physical properties and the evaluation of the effects.

[Example 8]

An active energy ray-curable resin composition in Example 8 was obtained in the same manner as in Example 2 except that thixotropy imparting agent B-3 (hydrophilic silica fine particles) was used instead of B-1(hydrophobic silica fine particles) shown in Table 2 in Example 2. The sample for evaluation and the sample for measurement of the resulting active energy ray-curable resin composition were used to perform the evaluation of the physical properties and the evaluation of the effects.

[Example 9]

An active energy ray-curable resin composition in Example 9 was obtained in the same manner as in Example 5 except that active energy ray-curable resin A-4 was used instead of A-1 shown in Table 1 in Example 5. The sample for evaluation and the sample for measurement of the resulting active energy ray-curable resin composition were used to perform the evaluation of the physical properties and the evaluation of the effects.

[Example 10]

An active energy ray-curable resin composition in Example 10 was obtained in the same manner as in Example 3 except that the gap between rolls of the three-roll mill in the main dispersion step was set to 75 μm in Example 3. The sample for evaluation and the sample for measurement of the resulting active energy ray-curable resin composition were used to perform the evaluation of the physical properties and the evaluation of the effects.

[Example 11]

An active energy ray-curable resin composition in Example 11 was obtained in the same manner as in Example 3 except that the gap between rolls of the three-roll mill in the main dispersion step was set to 35 μm in Example 3. The sample for evaluation and the sample for measurement of the resulting active energy ray-curable resin composition were used to perform the evaluation of the physical properties and the evaluation of the effects.

[Example 12]

An active energy ray-curable resin composition in Example 12 was obtained in the same manner as in Example 3 except that the gap between rolls of the three-roll mill in the main dispersion step was set to 95 μm in Example 3. The sample for evaluation and the sample for measurement of the resulting active energy ray-curable resin composition were used to perform the evaluation of the physical properties and the evaluation of the effects.

[Example 13]

An active energy ray-curable resin composition in Example 13 was obtained in the same manner as in Example 3 except that the gap between rolls of the three-roll mill in the main dispersion step was set to 15 μm in Example 3. The sample for evaluation and the sample for measurement of the resulting active energy ray-curable resin composition were used to perform the evaluation of the physical properties and the evaluation of the effects.

[Example 14]

An active energy ray-curable resin composition in Example 14 was obtained in the same manner as in Example 3 except that active energy ray-curable resin A-5 (urethane-based resin) was used instead of A-1 (silicone-based resin) shown in Table 1 in Example 3. The sample for evaluation and the sample for measurement of the resulting active energy ray-curable resin composition were used to perform the evaluation of the physical properties and the evaluation of the effects.

[Example 15]

An active energy ray-curable resin composition in Example 15 was obtained in the same manner as in Example 3 except that active energy ray-curable resin A-6 (acrylic resin) was used instead of A-1 (silicone-based resin) shown in Table 1 in Example 3. The sample for evaluation and the sample for measurement of the resulting active energy ray-curable resin composition were used to perform the evaluation of the physical properties and the evaluation of the effects.

[Example 16]

An active energy ray-curable resin composition in Example 16 was obtained in the same manner as in Example 9 except that thixotropy imparting agent B-2 (hydrophilic silica fine particles) was used instead of B-1 (hydrophobic silica fine particles) shown in Table 2 and the amount thereof blended was set to 10 parts by weight in Example 9. The sample for evaluation and the sample for measurement of the resulting active energy ray-curable resin composition were used to perform the evaluation of the physical properties and the evaluation of the effects.

[Example 17]

An active energy ray-curable resin composition in Example 17 was obtained in the same manner as in Example 3 except that the main dispersion step was performed as follows. The main dispersion step was performed by subjecting the preliminarily dispersed product to a dispersion treatment in which another three-roll mill (Model HHC-229 × 460 manufactured by Inoue Mfg., Inc.) different from that used in Example 3 was used under conditions of a roll diameter of 229 mm, a gap between rolls of 50 μm to 5 μm changed along with the progressing of the dispersion treatment, a feed roll rotation number of 20 rpm, an intermediate roll rotation number of 75 rpm, an apron roll rotation number of 200 rpm and a number of passes of once until particles of 50 μm or more disappeared when being measured by a grind gauge. The sample for evaluation and the sample for measurement of the resulting active energy ray-curable resin composition were used to perform the evaluation of the physical properties and the evaluation of the effects.

[Example 18]

An active energy ray-curable resin composition in Example 18 was obtained in the same manner as in Example 17 except that the dispersion treatment was performed under a condition of a number of passes of twice in the main dispersion step in Example 17. The sample for evaluation and the sample for measurement of the resulting active energy ray-curable resin composition were used to perform the evaluation of the physical properties and the evaluation of the effects.

[Example 19]

An active energy ray-curable resin composition in Example 19 was obtained in the same manner as in Example 17 except that the dispersion treatment was performed under a condition of a number of passes of 7 times in the main dispersion step while a gap between rolls of about 5 μm being kept in Example 17. The sample for evaluation and the sample for measurement of the resulting active energy ray-curable resin composition were used to perform the evaluation of the physical properties and the evaluation of the effects.

[Example 20]

An active energy ray-curable resin composition in Example 20 was obtained in the same manner as in Example 19 except that the amount of thixotropy imparting agent B-1 (hydrophobic silica fine particles) blended shown in Table 2 was changed to 12 parts by weight in Example 19. The sample for evaluation and the sample for measurement of the resulting active energy ray-curable resin composition were used to perform the evaluation of the physical properties and the evaluation of the effects.

[Comparative Example 1]

An active energy ray-curable resin composition in Comparative Example 1 was obtained in the same manner as in Example 1 except that active energy ray-curable resin A-3 was used instead of A-1 shown in Table 1 and the amount of thixotropy imparting agent B-1 blended shown in Table 2 was changed to 3 parts by weight in Example 1. The sample for evaluation and the sample for measurement of the resulting active energy ray-curable resin composition were used to perform the evaluation of the physical properties and the evaluation of the effects.

[Comparative Example 2]

An active energy ray-curable resin composition in Comparative Example 2 was obtained in the same manner as in Example 1 except that active energy ray-curable resin A-4 was used instead of A-1 shown in Table 1 and the amount of thixotropy imparting agent B-1 blended shown in Table 2 was changed to 30 parts by weight in Example 1. The sample for evaluation and the sample for measurement of the resulting active energy ray-curable resin composition were used to perform the evaluation of the physical properties and the evaluation of the effects.

[Comparative Example 3]

An active energy ray-curable resin composition in Comparative Example 3 was obtained in the same manner as in Example 1 except that the amount of thixotropy imparting agent B-1 blended shown in Table 2 was changed to 0.05 parts by weight in Example 1. The sample for evaluation and the sample for measurement of the resulting active energy ray-curable resin composition were used to perform the evaluation of the physical properties and the evaluation

of the effects.

[Comparative Example 4]

An active energy ray-curable resin composition in Comparative Example 4 was obtained in the same manner as in Comparative Example 2 except that thixotropy imparting agent B-2 was used instead of B-1 shown in Table 2 and the amount of thixotropy imparting agent B-2 blended was changed to 15 parts by weight in Comparative Example 2. The sample for evaluation and the sample for measurement of the resulting active energy ray-curable resin composition were used to perform the evaluation of the physical properties and the evaluation of the effects.

[Comparative Example 5]

An active energy ray-curable resin composition in Comparative Example 5 was obtained in the same manner as in Example 1 except that the amount of thixotropy imparting agent B-1 blended shown in Table 2 was changed to 0.1 parts by weight in Example 1. The sample for evaluation and the sample for measurement of the resulting active energy ray-curable resin composition were used to perform the evaluation of the physical properties and the evaluation of the effects.

[Comparative Example 6]

An active energy ray-curable resin composition in Comparative Example 6 was obtained in the same manner as in Example 3 except that while the gap between rolls and the roll rotation number in the main dispersion step were adjusted, the silica fine particles were dispersed until the particle size distribution thereof achieved a single peak. The sample for evaluation and the sample for measurement of the resulting active energy ray-curable resin composition were used to perform the evaluation of the physical properties and the evaluation of the effects.

The results in Examples 1 to 20 are shown in Tables 3 to 6, and the results in Comparative Examples 1 to 6 are shown in Table 7.

[Table 3]

| | | Example 1 | Example 2 | Example 3 | Example 4 | Example 5 |
|---|---|---|---|---|---|---|
| Active energy ray-curable resin (A) | Material | A-1 | A-1 | A-1 | A-1 | A-1 |
| | Amount blended (part(s) by weight) | 100 | 100 | 100 | 100 | 100 |
| Thixotropy imparting agent (B) | Material | B-1 | B-1 | B-1 | B-1 | B-1 |
| | Amount blended (part(s) by weight) | 0.1 | 6 | 10 | 15 | 25 |
| Viscosity [Pa·s] | Before aging | 40 | 100 | 150 | 200 | 400 |
| | Afteraging | 50 | 300 | 500 | 1000 | 2000 |
| Thixotropic coefficient | Before aging | 2 | 3.5 | 4 | 4.2 | 4.5 |
| | Afteraging | 1.2 | 2 | 3.5 | 2 | 1.2 |
| Number of peaks in particle size distribution (peaks) | | 3 | 3 | 3 | 3 | 3 |
| Peak diameter [μm] | Main peak | 0.08 | 0.08 | 0.08 | 0.08 | 0.08 |
| | Sub-peak 1 | 0.4 | 0.4 | 0.4 | 0.4 | 0.4 |
| | Sub-peak 2 | 1.5 | 1.5 | 1.5 | 1.5 | 1.5 |
| Relative particle amount in main peak [%] | | 80 | 80 | 74 | 70 | 67 |

(continued)

| | | Example 1 | Example 2 | Example 3 | Example 4 | Example 5 |
|---|---|---|---|---|---|---|
| Evaluation | Needle inner diameter [mm] | 0.5 | 0.5 | 0.5 | 0.5 | 0.5 |
| | Dischargeability | Good | Good | Good | Good | Fair |
| | Bead shape retention property | Fair | Good | Excellent | Excellent | Excellent |
| | Swell | 1.3 | 1.2 | 1.1 | 1.1 | 1.1 |
| | Stability | Good | Good | Good | Good | Good |

[Table 4]

| | | Example 6 | Example 7 | Example 8 | Example 9 | Example 10 |
|---|---|---|---|---|---|---|
| Active energy ray-curable resin (A) | Material | A-2 | A-1 | A-1 | A-4 | A-1 |
| | Amount blended (part(s) by weight) | 100 | 100 | 100 | 100 | 100 |
| Thixotropy imparting agent (B) | Material | B-1 | B-2 | B-3 | B-1 | B-1 |
| | Amount blended (part(s) by weight) | 10 | 6 | 6 | 25 | 1 0 |
| Viscosity [Pa·s] | Before aging | 500 | 150 | 500 | 1000 | 200 |
| | After aging | 1000 | 500 | 1500 | 5000 | 700 |
| Thixotropic coefficient | Before aging | 7 | 4 | 7 | 7 | 4 |
| | Afteraging | 5 | 3.5 | 6 | 6 | 3.5 |
| Number of peaks in particle size distribution (peaks) | | 3 | 3 | 3 | 3 | 3 |
| Peak diameter [μm] | Main peak | 0.08 | 0.08 | 0.08 | 0.08 | 0.09 |
| | Sub-peak 1 | 0.4 | 0.4 | 0.4 | 0.4 | 0.4 |
| | Sub-peak 2 | 1.5 | 1.5 | 1.5 | 1.5 | 1.5 |
| Relative particle amount in main peak [%] | | 70 | 74 | 70 | 60 | 42 |
| Evaluation | Needle inner diameter [mm] | 0.5 | 0.5 | 0.5 | 1 | 0.5 |
| | Dischargeability | Good | Good | Fair | Fair | Fair |
| | Bead shape retention property | Good | Excellent | Good | Good | Good |
| | Swell | 1.2 | 1.1 | 1.3 | 1.1 | 1.3 |
| | Stability | Good | Good | Good | Good | Good |

[Table 5]

| | | Example 11 | Example 12 | Example 13 | Example 14 | Example 15 |
|---|---|---|---|---|---|---|
| Active energy ray-curable resin (A) | Material | A-1 | A-1 | A-1 | A-5 | A-6 |
| | Amount blended (part(s) by weight) | 100 | 100 | 100 | 100 | 100 |
| Thixotropy imparting agent (B) | Material | B-1 | B-1 | B-1 | B-1 | B-1 |
| | Amount blended (part(s) by weight) | 10 | 10 | 10 | 10 | 10 |
| Viscosity [Pa·s] | Before aging | 100 | 200 | 100 | 160 | 150 |
| | After aging | 400 | 800 | 250 | 600 | 500 |
| Thixotropic coefficient | Before aging | 4 | 3.5 | 4.5 | 2 | 3 |
| | Afteraging | 3.5 | 3 | 4 | 1.6 | 2 |
| Number of peaks in particle size distribution (peaks) | | 2 | 3 | 2 | 3 | 3 |
| Peak diameter [μm] | Main peak | 0.08 | 0.08 | 0.08 | 0.08 | 0.08 |
| | Sub-peak 1 | 0.3 | 0.3 | 0.3 | 0.4 | 0.4 |
| | Sub-peak 2 | - | 3 | - | 1.5 | 1.5 |
| Relative particle amount in main peak [%] | | 90 | 35 | 92 | 72 | 75 |
| Evaluation | Needle inner diameter [mm] | 0.5 | 0.5 | 0.5 | 0.5 | 0.5 |
| | Dischargeability | Good | Fair | Good | Good | Good |
| | Bead shape retention property | Good | Excellent | Fair | Excellent | Excellent |
| | Swell | 1.6 | 1.5 | 2.0 | 1.1 | 1.3 |
| | Stability | Good | Good | Good | Good | Good |

[Table 6]

| | | Example 16 | Example 17 | Example 18 | Example 19 | Example 20 |
|---|---|---|---|---|---|---|
| Active energy ray-curable resin (A) | Material | A-4 | A-1 | A-1 | A-1 | A-1 |
| | Amount blended (part(s) by weight) | 100 | 100 | 100 | 100 | 100 |
| Thixotropy imparting agent (B) | Material | B-2 | B-1 | B-1 | B-1 | B-1 |
| | Amount blended (part(s) by weight) | 10 | 10 | 10 | 10 | 12 |
| Viscosity [Pa·s] | Before aging | 200 | 200 | 200 | 150 | 150 |
| | After aging | 400 | 400 | 500 | 300 | 400 |

(continued)

| | | Example 16 | Example 17 | Example 18 | Example 19 | Example 20 |
|---|---|---|---|---|---|---|
| Thixotropic coefficient | Before aging | 11 | 3.5 | 3.5 | 4 | 4 |
| | After aging | 10 | 3 | 3 | 3.5 | 3.5 |
| Number of peaks in particle size distribution (peaks) | | 2 | 3 | 3 | 3 | 3 |
| Peak diameter [µm] | Main peak | 0.1 | 0.15 | 0.15 | 0.16 | 0.3 |
| | Sub-peak 1 | 0.7 | 0.3 | 0.8 | 0.7 | 0.8 |
| | Sub-peak 2 | - | 3 | 3 | 2 | 5 |
| Relative particle amount in main peak [%] | | 65 | 25 | 30 | 42 | 46 |
| Evaluation | Needle inner diameter [mm] | 0.5 | 0.5 | 0.5 | 0.5 | 0.5 |
| | Dischargeability | Fair | Fair | Fair | Good | Good |
| | Bead shape retention property | Good | Fair | Good | Excellent | Excellent |
| | Swell | 1.3 | 2.0 | 1.5 | 1.1 | 1.1 |
| | Stability | Fair | Good | Good | Good | Good |

[Table 7]

| | | Comparative Example 1 | Comparative Example 2 | Comparative Example 3 | Comparative Example 4 | Comparative Example 5 | Comparative Example 6 |
|---|---|---|---|---|---|---|---|
| Active energy ray-curable resin (A) | Material | A-3 | A-4 | A-1 | A-4 | A-1 | A-1 |
| | Amount blended (part(s) by weight) | 100 | 100 | 100 | 100 | 100 | 100 |
| Thixotropy imparting agent (B) | Material | B-1 | B-1 | B-1 | B-2 | B-1 | B-1 |
| | Amount blended (part(s) by weight) | 3 | 30 | 0.05 | 15 | 0.1 | 10 |
| Viscosity [Pa·s] | Before aging | 25 | 500 | 30 | 200 | 30 | 150 |
| | After aging | 30 | 5500 | 30 | 600 | 30 | 300 |
| Thixotropic coefficient | Before aging | 1.1 | 5 | 1.1 | 8 | 1.1 | 4 |
| | After aging | 1.2 | 1.3 | 1.1 | 11 | 1.0 | 1.2 |
| Number of peaks in particle size distribution (peaks) | | 3 | 3 | 3 | 2 | 3 | 1 |
| Peak diameter [μm] | Main peak | 0.08 | 0.1 | 0.1 | 0.1 | 0.1 | 0.07 |
| | Sub-peak 1 | 0.4 | 0.5 | 0.4 | 0.7 | 0.4 | - |
| | Sub-peak 2 | 2 | 3 | 2 | - | 2 | - |
| Relative particle amount in main peak [%] | | 50 | 60 | 60 | 65 | 62 | 98 |
| Evaluation | Needle inner diameter [mm] | 0.5 | 1 | 0.5 | 0.5 | 0.5 | 0.5 |
| | Dischargeability | Good | Bad | Good | Bad | Good | Good |
| | Bead shape retention properly | Bad | - | Bad | - | Bad | Bad |
| | Swell | 2.5 | 1.4 | 2.6 | 1.4 | 2.2 | 2.5 |
| | Stability | Bad | Bad | Bad | Bad | Bad | Good |

It was indicated from the results shown in Tables 3 to 7 that each of the active energy ray-curable resin compositions for seal materials in Examples 1 to 20 had such excellent performances that the composition was excellent in dischargeability, and diameter accuracy (low Swell) and shape retention property of a bead-shaped discharged object even by being applied by a needle with a port having a small inner diameter of 1 mm or less and was hardly cut by and was stable against tensile stress applied at the time of coating with the bead-shaped discharged object. It was thus indicated that the apparent viscosity, the thixotropic coefficient and the dispersion state of the **silica** fine particles in the active energy ray-curable resin composition were set under the specified conditions, achieving the action effects of the present invention. On the other hand, it was found that in Comparative Examples 1 to 5 in which the apparent viscosity and the thixotropic coefficient of the active energy ray-curable resin composition were not under the specified conditions, at least one of dischargeability, diameter expansion (Swell) and shape retention property of a bead-shaped discharged object was evaluated to be poor, and if the applying speed was higher, the bead-shaped discharged object was easily cut and was also poor in productivity, not achieving the action effects of the present invention. Herein, the evaluation results of the active energy ray-curable resin composition for seal materials in Comparative Example 2 were the same even if a needle having an inner diameter of 0.5 mm was used.

The particle size distribution measurement result indicating the dispersion state of the **silica** fine particles in the active energy ray-curable resin composition prepared in each of Example 3 and Comparative Example 6 is shown in Figure 12. Only the dispersion state of the **silica** fine particles was different between Example 3 and Comparative Example 6, and as shown in Figure 12, the particle size distribution of the **silica** fine particles in the active energy ray-curable resin composition in Comparative Example 6 showed a single peak (the relative particle amount in the particle diameter range having the main peak area was close to 1000), and on the contrary, the particle size distribution of the **silica** fine particles in the active energy ray-curable resin composition in Example 3 showed three peaks. From the fact that the active energy ray-curable resin composition in Comparative Example 6 did not achieve the effects of the present invention, it was found that the dispersion state of the **silica** fine particles in the active energy ray-curable resin composition was important. In addition, when the results in Examples 1 to 12, 14 to 16 and 18 to 20 were compared with the results in Example 13 and 17 for studying, in particular, with respect to the effect about Swell, it was found that a preferable dispersion state of the **silica** fine particles in the active energy ray-curable resin was as follows: the relative particle amount in the particle diameter range having the main peak area was preferably 30 to 90%, and from comparison of the results in Examples 1 to 10, 14 to 16, 19 and 20 with the results in Examples 11, 12 and 18, was more preferably 40 to 80%.

Furthermore, when the result in Example 2 was compared with the result in Example 8, Example 8 in which hydrophilic **silica** fine particles were used as the thixotropy imparting agent demonstrated that the **silica** fine particles were hardly dispersed in the active energy ray resin as compared with the case in Example 2 in which hydrophobic **silica** fine particles were used, to result in the increase in viscosity, and the **silica** fine particles were found to be more preferably hydrophobic. In addition, it was found from comparison among the results in Example 3, Example 1.4 and Example 15 that even when the active energy ray resin had a different component, it was within the ranges of the physical properties and the dispersion state of the **silica** fine particles, found in the present invention, thereby achieving the action effects of the present invention.

## Industrial Applicability

The active energy ray-curable resin composition for seal materials of the present invention is suitably used for forming a bead-shaped seal material by needle applying, is optimal as a seal material for narrow space portions, and contributes to the reduction in size of an electronic device into which the seal material is incorporated, and cost reduction. The bead-shaped seal material is arranged between at least two acting members, or is arranged on one acting member, to exert functions such as waterproof property, dust resistance, cushioning property, vibration-proofing property, vibration-damping property, stress relaxation property, gap complementary property, backlash resistance, slippage resistance and collision noise reduction property.

## Description of Symbols

1 bead-shaped seal material
10 bead-shaped discharged object
11 active energy ray-curable resin composition for seal materials
20 first substrate to be sealed (substrate for application)
21 second substrate to be sealed
3 seal structure

4 needle-shaped coating part
5 container in which active energy ray-curable resin composition for seal materials is filled
8 active energy ray irradiation unit
9 three-dimensionally controlled coating apparatus
90 pressure air supply pipe
B sample stand (stage)
S1 blending step
S2 dispersion step
S2a preliminary dispersion step
S2b main dispersion step
S3 aging step
S10 Preparation of active energy ray-curable composition for seal materials
S11 bead-shaped discharged object formation step
S12 curing step
S12a preliminary irradiation step
S12b intermediate processing step
S12c main irradiation step

## Claims

1. An active energy ray-curable resin composition for seal materials, comprising at least a thixotropy imparting agent (B) in an amount of 0.1 to 25 parts by weight dispersed in 100 parts by weight of an active energy ray-curable resin (A), wherein
the active energy ray-curable resin composition has an apparent viscosity in an uncured state (according to JIS Z8803, cone and plate rotation viscometer, 40°C) of 50 to 5000 Pa·s in a shearing speed range from 0.1 to 10 /sec and has a thixotropic coefficient, determined from the apparent viscosity in the shearing speed range, of 1.1 to 10,
the thixotropy imparting agent (B) is made of silica fine particles, and
the silica fine particles in the active energy ray-curable resin (A) exhibit a particle size distribution having a plurality of peaks.

2. The active energy ray-curable resin composition for seal materials according to claim 1, wherein a relative particle amount in a particle diameter range having the largest peak area in the particle size distribution is 30 to 90%.

3. The active energy ray-curable resin composition for seal materials according to claim 2, wherein a particle diameter at the peak of the largest peak area is 0.05 to 1 μm.

4. The active energy ray-curable resin composition for seal materials according to any one of claims 1 to 3, wherein the silica fine particle are made of a hydrophobic silica having a degree of hydrophobicity of 50 to 90%.

5. The active energy ray-curable resin composition for seal materials according to any one of claims 1 to 4, wherein the active energy ray-curable resin (A) is an ultraviolet ray-curable resin.

6. The active energy ray-curable resin composition for seal materials according to any one of claims 1 to 5, wherein the active energy ray-curable resin (A) is one or more active energy ray-curable resins selected from the group consisting of a silicone-based resin, an acrylic resin and a urethane-based resin.

7. A method for producing the active energy ray-curable resin composition for seal materials according to any one of claims 1 to 6, comprising at least
a blending step of blending the active energy ray-curable resin (A) with the silica fine particles,
a dispersion step of dispersing the silica fine particles in the active energy ray-curable resin (A), and
an aging step of leaving the active energy ray-curable resin, in which the silica fine particles are dispersed, to still stand for a predetermined period, wherein
the dispersion step is to disperse the silica fine particles in the active energy ray-curable resin (A) so that the silica fine particles exhibit a particle size distribution having a plurality of peaks and have a relative particle amount of 30 to 90% in a particle diameter range having the largest peak area in the particle size distribution.

8. The method for producing the active energy ray-curable resin composition for seal materials according to claim 7,

wherein the particle diameter at the peak in the largest peak area is 0.05 to 1 μm in the dispersion step.

**9.** A seal material obtained by using the active energy ray-curable resin composition for seal materials according to any one of claims 1 to 6.

**10.** The seal material according to claim 9, wherein a line diameter cross section shape of the seal material is a horseshoe-like shape.

**11.** A seal structure in which the seal material according to claim 9 or 10 is sandwiched between a first substrate to be sealed and a second substrate to be sealed.

**12.** A method for producing a seal material, comprising at least a bead-shaped discharged object formation step of discharging the active energy ray-curable resin composition for seal materials according to any one of claims 1 to 6 from a discharge port of a needle-shaped coating part to form a bead-shaped discharged object, and
a curing step of irradiating the bead-shaped discharged object with an active energy ray for curing, wherein
the discharge port has an inner diameter of 1 mm or less.

**13.** The method for producing a seal material according to claim 12, wherein the bead-shaped discharged object formation step is to discharge the active energy ray-curable resin composition for seal materials on a substrate for application, while relatively transferring the discharge port of the needle-shaped coating part to the substrate for application, to form a bead-shaped discharged object, and
a relative transfer speed of the discharge port of the needle-shaped coating part to the substrate for application is higher than a discharge speed of the active energy ray-curable resin composition for seal materials from the discharge port of the needle-shaped coating part.

**14.** The method for producing a seal material according to claim 12 or 13, wherein the curing step comprises at least a preliminary irradiation step of semi-curing the bead-shaped discharged object, and a main irradiation step of curing the bead-shaped discharged object until a degree of crosslinking of the active energy ray-curable resin composition for seal materials for forming the bead-shaped discharged object reaches 90% or more.

**15.** The method for producing a seal material according to claim 14, wherein in the preliminary irradiation step, a light amount of an active energy ray with which the bead-shaped discharged object is irradiated is 1 to 50% as a cumulative light amount based on a cumulative light amount in which the degree of crosslinking of the active energy ray-curable resin composition for seal materials for forming the bead-shaped discharged object reaches 90% or more.

**16.** The method for producing a seal material according to claim 14 or 15, wherein an intermediate processing step of allowing the bead-shaped discharged object in a semi-cured state to partially flow for change in shape is provided between the preliminary irradiation step and the main irradiation step.

**17.** The method for producing a seal material according to any one of claims 14 to 16, wherein the preliminary irradiation step in the curing step is initiated between discharging of the active energy ray-curable resin composition for seal materials from the discharge port of the needle-shaped coating part and bringing of the bead-shaped discharged object into contact with the substrate for application.

**Patentansprüche**

**1.** Mit aktiven Energiestrahlen härtbare Harzzusammensetzung für Dichtmaterialien, umfassend zumindest ein Thixotropie-verleihendes Mittel (B) in einer Menge von 0,1 bis 25 Gewichtsteilen, das in 100 Gewichtsteilen eines mit aktiven Energiestrahlen härtbaren Harzes (A) dispergiert ist, wobei
die mit aktiven Energiestrahlen härtbare Harzzusammensetzung eine scheinbare Viskosität in einem nicht gehärteten Zustand (gemäß JIS Z8803, Kegel- und Platten-Rotationviskosimeter, 40°C) von 50 bis 5000 Pa·s in einem Schergeschwindigkeitsbereich von 0,1 bis 10/Sek aufweist und einen thixotropen Koeffizienten, bestimmt aus der scheinbaren Viskosität in dem Schergeschwindigkeitsbereich, von 1,1 bis 10 aufweist,
das Thixotropie-verleihende Mittel (B) aus Siliziumoxidfeinteilchen hergestellt ist, und
die Siliziumoxidfeinteilchen in dem mit aktiven Energiestrahlen härtbaren Harz (A) eine Teilchengrößenverteilung aufzeigen, die eine Mehrzahl von Peaks aufweist.

2. Mit aktiven Energiestrahlen härtbare Harzzusammensetzung für Dichtmaterialien nach Anspruch 1, wobei die relative Teilchenmenge in einem Teilchendurchmesserbereich mit der größten Peakfläche in der Teilchengrößenverteilung 30 bis 90 % beträgt.

3. Mit aktiven Energiestrahlen härtbare Harzzusammensetzung für Dichtmaterialien nach Anspruch 2, wobei ein Teilchendurchmesser an dem Peak der größten Peakfläche 0,05 bis 1 $\mu$m beträgt.

4. Mit aktiven Energiestrahlen härtbare Harzzusammensetzung für Dichtmaterialien nach einem der Ansprüche 1 bis 3, wobei die Siliziumoxidfeinteilchen aus einem hydrophoben Siliziumoxid hergestellt sind, das einen Hydrophobiegrad von 50 bis 90 % aufweist.

5. Mit aktiven Energiestrahlen härtbare Harzzusammensetzung für Dichtmaterialien nach einem der Ansprüche 1 bis 4, wobei das mit aktiven Energiestrahlen härtbare Harz (A) ein mit Ultraviolettstrahlen härtbares Harz ist.

6. Mit aktiven Energiestrahlen härtbare Harzzusammensetzung für Dichtmaterialien nach einem der Ansprüche 1 bis 5, wobei das mit aktiven Energiestrahlen härtbare Harz (A) eines oder mehrere mit aktiven Energiestrahlen härtbare Harze ausgewählt aus der Gruppe bestehend aus einem Silikon-basierten Harz, einem Acryl-basierten Harz und einem Urethan-basierten Harz ist.

7. Verfahren zum Herstellen einer mit aktiven Energiestrahlen härtbaren Harzzusammensetzung für Dichtmaterialien nach einem der Ansprüche 1 bis 6, umfassend zumindest
einen Vermengungsschritt des Vermengens des mit aktiven Energiestrahlen härtbaren Harzes (A) mit den Siliziumoxidfeinteilchen,
einen Dispersionsschritt des Dispergierens der Siliziumoxidfeinteilchen in dem mit aktiven Energiestrahlen härtbaren Harz (A), und
einen Alterungsschritt des Belassens des mit aktiven Energiestrahlen härtbaren Harzes, in welchem die Siliziumoxidfeinteilchen dispergiert sind, unter Stillstand für eine bestimmte Zeitdauer, wobei
der Dispersionsschritt zum Dispergieren der Siliziumoxidfeinteilchen in dem mit aktiven Energiestrahlen härtbaren Harz (A) gedacht ist, so dass die Siliziumoxidfeinteilchen eine Teilchengrößenverteilung mit einer Mehrzahl von Peaks aufweisen und eine relative Teilchenmenge von 30 bis 90 % in einem Teilchendurchmesserbereich mit der größten Peakfläche in der Teilchengrößenverteilung aufweisen.

8. Verfahren zum Herstellen der mit aktiven Energiestrahlen härtbaren Harzzusammensetzung für Dichtmaterialien nach Anspruch 7, wobei in dem Dispersionsschritt der Teilchendurchmesser an dem Peak bei der größten Peakfläche 0,05 bis 1 $\mu$m beträgt.

9. Dichtmaterial, das unter Verwendung der mit aktiven Energiestrahlen härtbaren Harzzusammensetzung für Dichtmaterialien nach einem der Ansprüche 1 bis 6 erhalten ist.

10. Dichtmaterial nach Anspruch 9, wobei eine Leitungsdurchmesserquerschnittsform des Dichtmaterials eine hufeisenartige Form ist.

11. Dichtstruktur, in welcher das Dichtmaterial nach Anspruch 9 oder 10 zwischen einem ersten Substrat, das abzudichten ist, und einem zweiten Substrat, das abzudichten ist, gelagert ist.

12. Verfahren zum Herstellen eines Dichtmaterials, umfassend zumindest einen Bildungsschritt für ein perlenförmiges ausgestoßenes Objekt des Ausstoßens der mit aktiven Energiestrahlen härtbaren Harzzusammensetzung für Dichtmaterialien nach einem der Ansprüche 1 bis 6 aus einer Ausstoßöffnung eines nadelförmigen Beschichtungsteils, um ein perlenförmiges ausgestoßenes Objekt zu bilden, und
einen Härtungsschritt des Bestrahlens des perlenförmigen ausgestoßenen Objekts mit aktiven Energiestrahlen zum Härten, wobei
die Ausstoßöffnung einen Innendurchmesser von 1 mm oder weniger aufweist.

13. Verfahren zum Herstellen eines Dichtmaterials nach Anspruch 12, wobei der Bildungsschritt des perlenförmigen ausgestoßenen Objekts zum Ausstoßen der mit aktiven Energiestrahlen härtbaren Harzzusammensetzung für Dichtmaterialien auf ein Substrat zur Aufbringung gedacht ist, während die Ausstoßöffnung des nadelförmigen Beschichtungsteils relativ zu dem Substrat zur Aufbringung transferiert wird, um ein perlenförmiges ausgestoßenes Objekt zu bilden, und

eine relative Transfergeschwindigkeit der Ausstoßöffnung des nadelförmigen Beschichtungsteils zu dem Substrat für die Aufbringung höher ist als eine Ausstoßgeschwindigkeit der mit aktiven Energiestrahlen härtbaren Harzzusammensetzung für Dichtmaterialien aus der Ausstoßöffnung des nadelförmigen Beschichtungsteils.

**14.** Verfahren zum Herstellen eines Dichtmaterials nach Anspruch 12 oder 13, wobei der Härtungsschritt zumindest einen Vorbestrahlungsschritt des Halb-Härtens des perlenförmigen ausgestoßenen Objekts und einen Hauptbestrahlungsschritt des Härtens des perlenförmigen ausgestoßenen Objekts, bis ein Vernetzungsgrad der mit aktiven Energiestrahlen härtbaren Harzzusammensetzung für Dichtmaterialien zum Bilden des perlenförmigen ausgestoßenen Objekts 90 % oder mehr beträgt, umfasst.

**15.** Verfahren zum Herstellen eines Dichtmaterials nach Anspruch 14, wobei in dem Vorbestrahlungsschritt eine Lichtmenge einer aktiven Energiestrahlung, mit welcher das perlenförmige ausgestoßene Objekt bestrahlt wird, 1 bis 50 % wie eine kumulative Lichtmenge basierend auf einer kumulativen Lichtmenge beträgt, in welcher der Vernetzungsgrad der mit aktiven Energiestrahlen härtbaren Harzzusammensetzung für Dichtmaterialien zum Bilden des perlenförmigen ausgestoßenen Objekts 90 % oder mehr beträgt.

**16.** Verfahren zum Herstellen eines Dichtmaterials nach Anspruch 14 oder 15, wobei ein Zwischenprozessierschritt des Ermöglichens, dass das perlenförmige ausgestoßene Objekt in einem halb-gehärteten Zustand teilweise zur Veränderung der Form fließt, zwischen dem Vorbestrahlungsschritt und dem Hauptbestrahlungsschritt vorgesehen ist.

**17.** Verfahren zum Herstellen eines Dichtmaterials nach einem der Ansprüche 14 bis 16, wobei der Vorbestrahlungsschritt in dem Härtungsschritt zwischen dem Ausstoßen der mit aktiven Energiestrahlen härtbaren Harzzusammensetzung für Dichtmaterialien aus der Ausstoßöffnung des nadelförmigen Beschichtungsteils und dem in Kontaktbringen des perlenförmigen ausgestoßenen Objekts mit dem Substrat für die Aufbringung initiiert wird.

## Revendications

**1.** Composition de résine polymérisable par rayon d’énergie active pour des matériaux d’étanchéité, comprenant au moins un agent conférant de la thixotropie (B) en une quantité de 0,1 à 25 parties en poids, dispersé dans 100 parties en poids d’une résine polymérisable par rayon d’énergie active (A), dans laquelle
la composition de résine polymérisable par rayon d’énergie active a une viscosité apparente à l’état non durci (d’après la norme japonaise JIS Z8803, viscosimètre rotatif cône et plan, à 40 °C) de 50 à 5000 Pa·s dans une plage de vitesse de cisaillement de 0,1 à 10/sec et un coefficient de thixotropie, déterminé à partir de la viscosité apparente dans la plage de vitesse de cisaillement, allant de 1,1 à 10,
l’agent conférant de la thixotropie (B) est constitué de fines particules de silice, et
les fines particules de silice dans la résine polymérisable par rayon d’énergie active (A) présentent une distribution des tailles de particules ayant une pluralité de pics.

**2.** Composition de résine polymérisable par rayon d’énergie active pour des matériaux d’étanchéité selon la revendication 1, dans laquelle une quantité relative de particules dans une plage de diamètre de particules ayant l’aire sous le pic la plus large dans la distribution des tailles de particules est de 30 à 90 %.

**3.** Composition de résine polymérisable par rayon d’énergie active pour des matériaux d’étanchéité selon la revendication 2, dans laquelle un diamètre des particules au niveau du pic de l’aire sous le pic la plus large est de 0,05 à 1 μm.

**4.** Composition de résine polymérisable par rayon d’énergie active pour des matériaux d’étanchéité selon l’une quelconque des revendications 1 à 3, dans laquelle les fines particules de silice sont constituées d’une silice hydrophobe ayant un degré d’hydrophobie de 50 à 90 %.

**5.** Composition de résine polymérisable par rayon d’énergie active pour des matériaux d’étanchéité selon l’une quelconque des revendications 1 à 4, dans laquelle la résine polymérisable par rayon d’énergie active (A) est une résine polymérisable par rayon ultraviolet.

**6.** Composition de résine polymérisable par rayon d’énergie active pour des matériaux d’étanchéité selon l’une quelconque des revendications 1 à 5, dans laquelle la résine polymérisable par rayon d’énergie active (A) est une ou plusieurs résines polymérisables par rayon d’énergie active choisies dans le groupe consistant en une résine à base de silicone, une résine acrylique et une résine à base d’uréthane.

7. Procédé de production d'une composition de résine polymérisable par rayon d'énergie active pour des matériaux d'étanchéité selon l'une quelconque des revendications 1 à 6, comprenant au moins
une étape de mélange pour mélanger la résine polymérisable par rayon d'énergie active (A) avec les fines particules de silice,
une étape de dispersion pour disperser les fines particules de silice dans la résine polymérisable par rayon d'énergie active (A), et
une étape de vieillissement pour laisser la résine polymérisable par rayon d'énergie active, dans laquelle les fines particules de silice sont dispersées, au repos pendant une durée prédéterminée, dans lequel
l'étape de dispersion est destinée à disperser les fines particules de silice dans la résine polymérisable par rayon d'énergie active (A) de sorte que les fines particules de silice présentent une distribution de tailles de particules ayant une pluralité de pics et ont une quantité relative de particules de 30 à 90 % dans une plage de diamètres de particules ayant l'aire sous le pic la plus large dans la distribution de tailles de particules.

8. Procédé de production de la composition de résine polymérisable par rayon d'énergie active pour des matériaux d'étanchéité selon la revendication 7, dans lequel le diamètre de particules au niveau du pic dans l'aire sous le pic la plus large est de 0,05 à 1 μm lors de l'étape de dispersion.

9. Matériau d'étanchéité obtenu en utilisant la composition de résine polymérisable par rayon d'énergie active pour des matériaux d'étanchéité selon l'une quelconque des revendications 1 à 6.

10. Matériau d'étanchéité selon la revendication 9, dans lequel une forme de section transversale du diamètre linéaire du matériau d'étanchéité est une forme de type fer à cheval.

11. Structure d'étanchéité, dans laquelle le matériau d'étanchéité selon la revendication 9 ou 10 est pris en sandwich entre un premier substrat qui doit être rendu étanche et un second substrat qui doit être rendu étanche.

12. Procédé de production d'un matériau d'étanchéité, comprenant au moins une étape de formation d'un objet déchargé en forme de bille pour décharger la composition de résine polymérisable par rayon d'énergie active pour des matériaux d'étanchéité selon l'une quelconque des revendications 1 à 6 à partir d'un orifice de déchargement d'une pièce de revêtement en forme d'aiguille afin de former un objet déchargé en forme de bille, et
une étape de polymérisation pour irradier l'objet déchargé en forme de bille par un rayon d'énergie active pour la polymérisation, dans lequel
l'orifice de déchargement possède un diamètre intérieur de 1 mm ou moins.

13. Procédé de production d'un matériau d'étanchéité selon la revendication 12, dans lequel l'étape de formation de l'objet déchargé en forme de bille est destinée à décharger la composition de résine polymérisable par rayon d'énergie active pour des matériaux d'étanchéité sur un substrat aux fins de l'application tout en effectuant le transfert relatif de l'orifice de déchargement de la pièce de revêtement en forme d'aiguille vers le substrat aux fins de l'application, afin de former un objet déchargé en forme de bille, et
une vitesse de transfert relatif de l'orifice de déchargement de la pièce de revêtement en forme d'aiguille vers le substrat aux fins de l'application est plus élevée qu'une vitesse de déchargement de la composition de résine polymérisable par rayon d'énergie active pour des matériaux d'étanchéité à partir de l'orifice de déchargement de la pièce de revêtement en forme d'aiguille.

14. Procédé de production d'un matériau d'étanchéité selon la revendication 12 ou 13, dans lequel l'étape de polymérisation comprend au moins une étape d'irradiation préliminaire pour semi-polymériser l'objet déchargé en forme de bille, et une étape d'irradiation principale pour polymériser l'objet déchargé en forme de bille jusqu'à ce qu'un degré de réticulation de la composition de résine polymérisable par rayon d'énergie active pour des matériaux d'étanchéité permettant de former l'objet déchargé en forme de bille atteigne 90 % ou plus.

15. Procédé de production d'un matériau d'étanchéité selon la revendication 14, dans lequel, au cours de l'étape d'irradiation préliminaire, une quantité lumineuse d'un rayon d'énergie active avec laquelle l'objet déchargé en forme de bille est irradié est de 1 à 50 % en tant que quantité lumineuse cumulative sur la base de la quantité lumineuse cumulative à laquelle le degré de réticulation de la composition de résine polymérisable par rayon d'énergie active pour des matériaux d'étanchéité permettant de former l'objet déchargé en forme de bille atteint 90 % ou plus.

16. Procédé de production d'un matériau d'étanchéité selon la revendication 14 ou 15, dans lequel une étape de traitement intermédiaire pour permettre à l'objet déchargé en forme de bille à l'état semi-polymérisé de s'écouler

partiellement pour changer de forme est réalisée entre l'étape d'irradiation préliminaire et l'étape d'irradiation principale.

**17.** Procédé de production d'un matériau d'étanchéité selon l'une quelconque des revendications 14 à 16, dans lequel l'étape d'irradiation préliminaire lors de l'étape de polymérisation est initiée entre le déchargement de la composition de résine polymérisable par rayon d'énergie active pour des matériaux d'étanchéité à partir de l'orifice de déchargement de la pièce de revêtement en forme d'aiguille et la mise en contact de l'objet déchargé en forme de bille avec le substrat aux fins de l'application.

Figure. 1

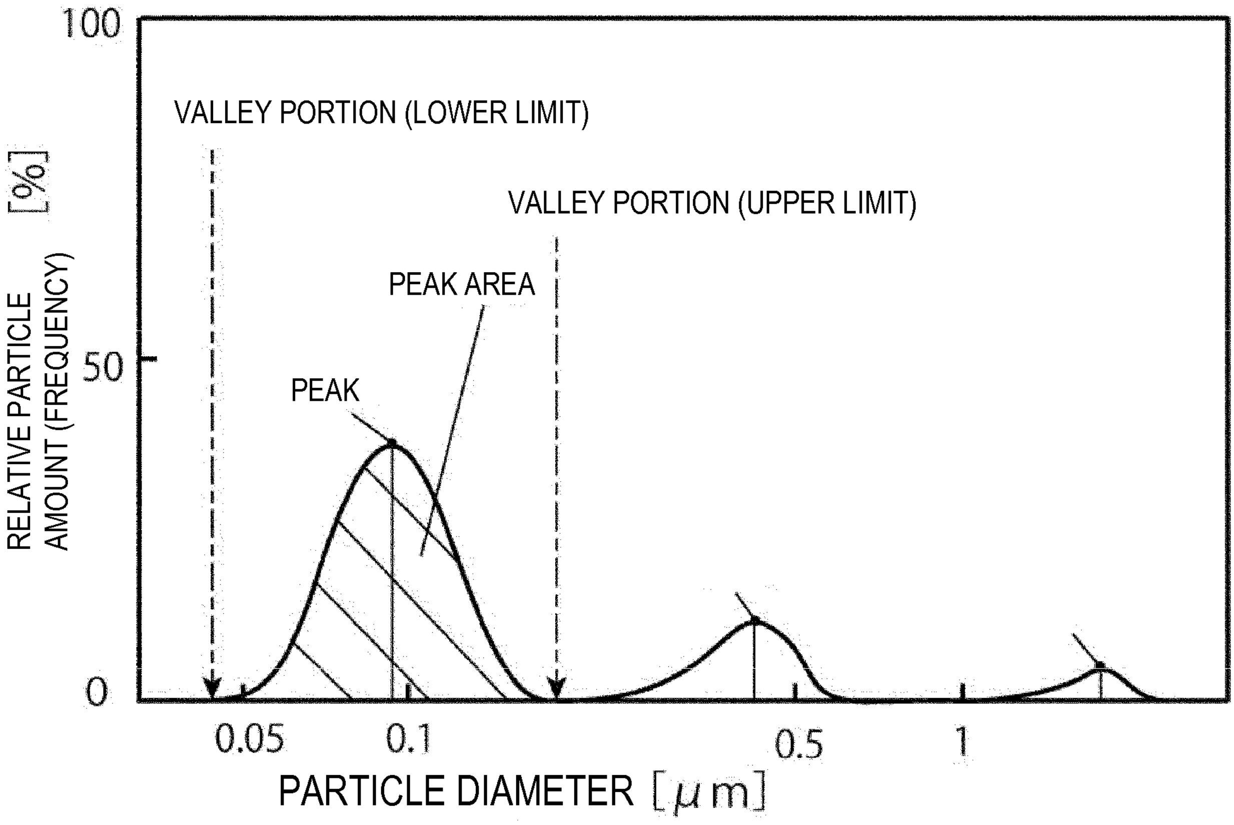


Figure. 2

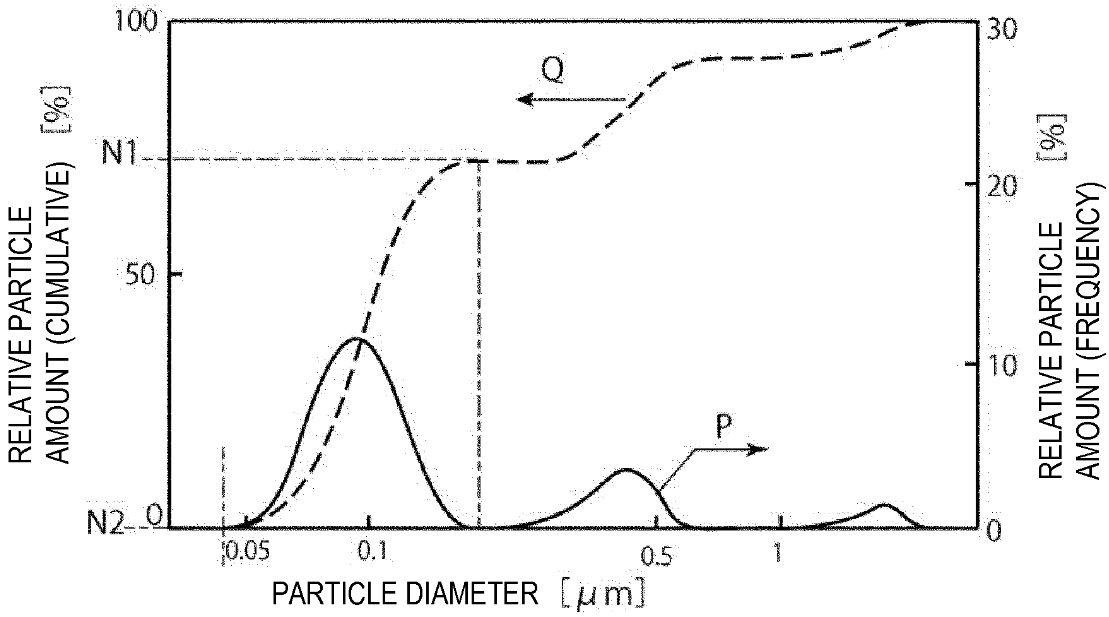

Figure. 3

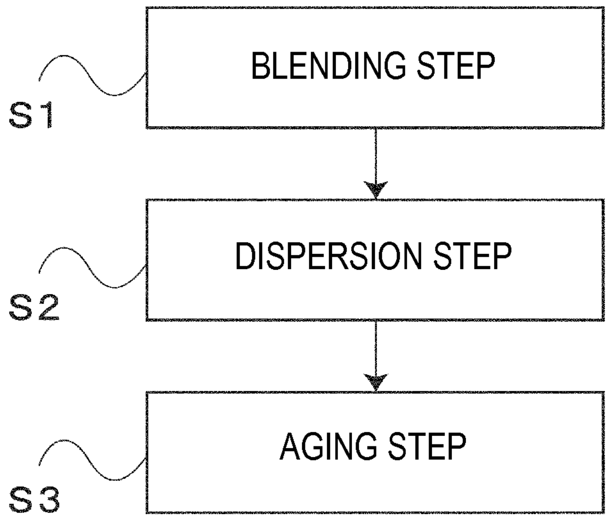


Figure. 4

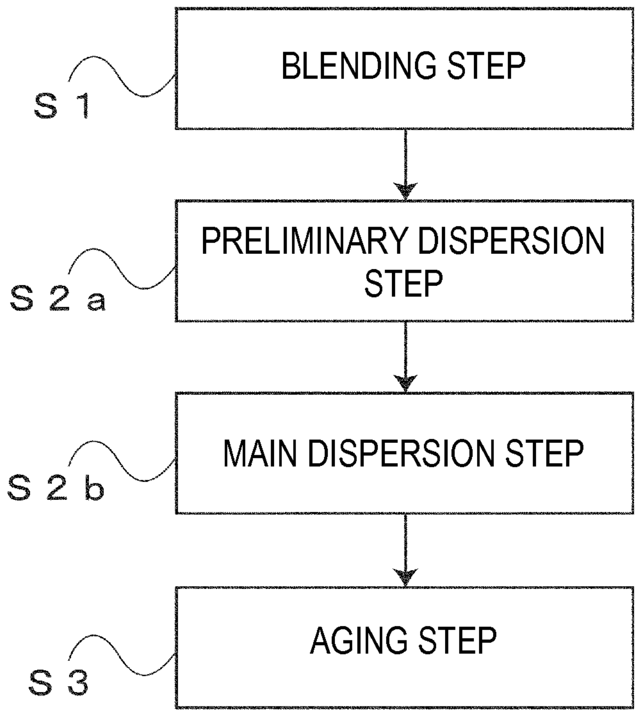

# Figure. 5

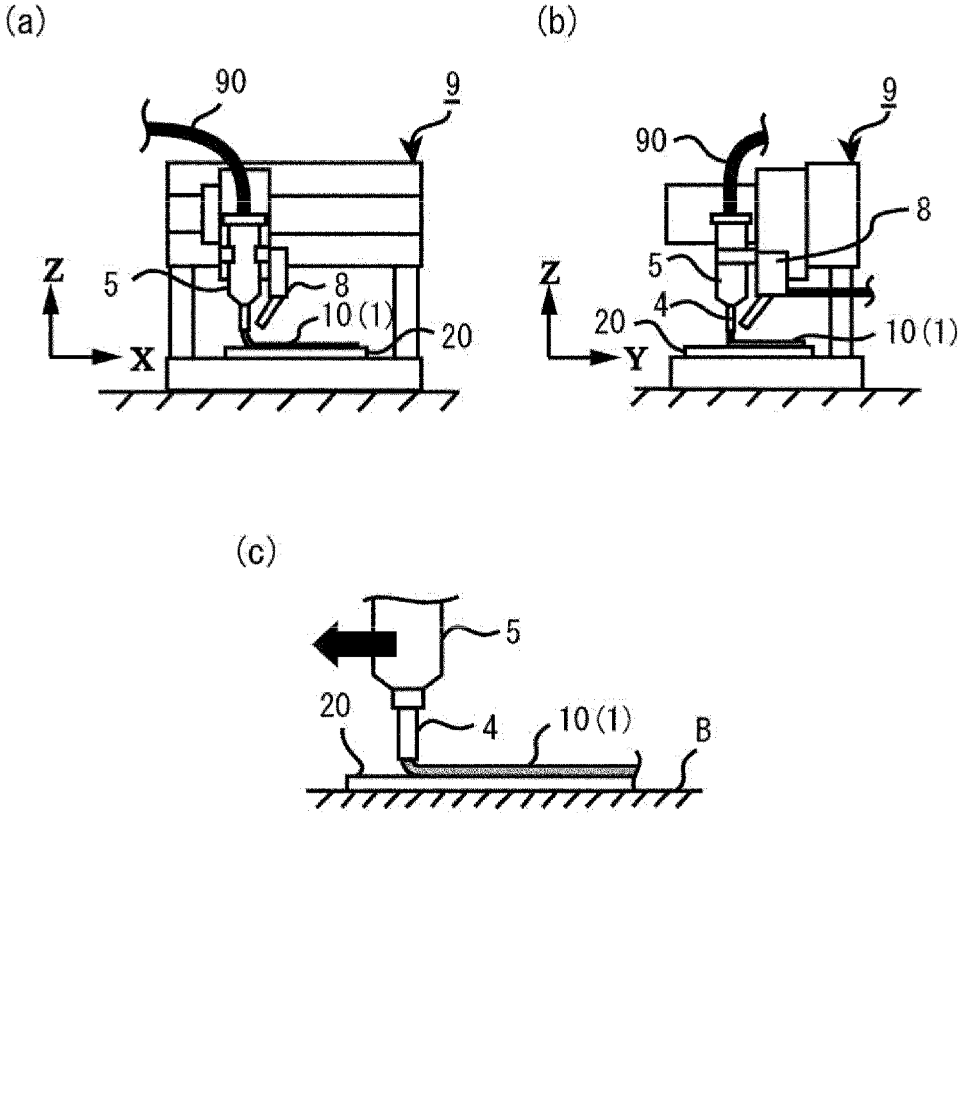

Figure. 6

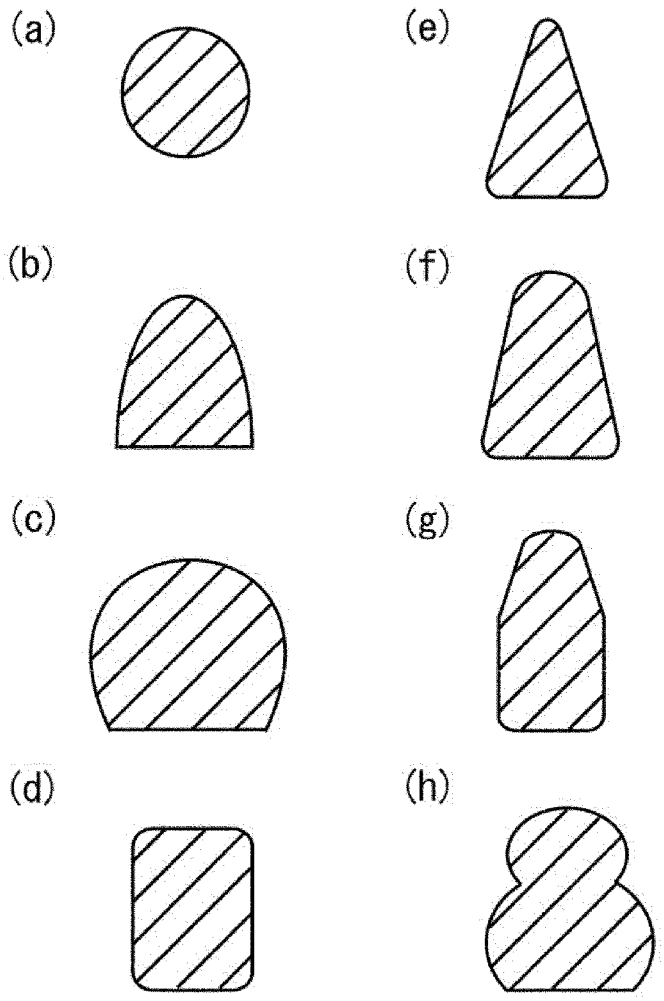

Figure. 7

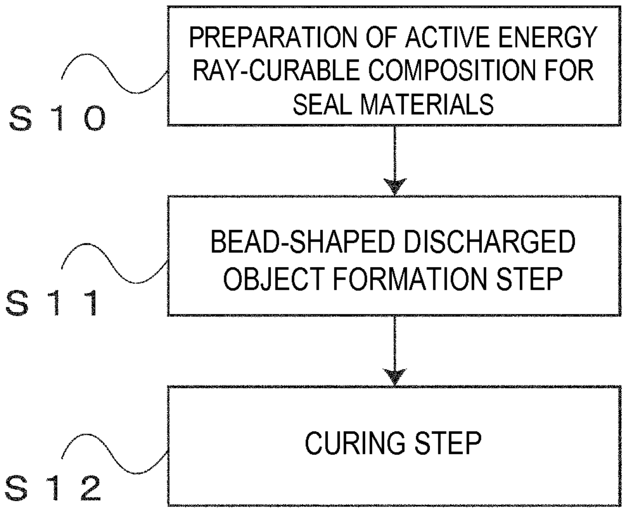


Figure. 8

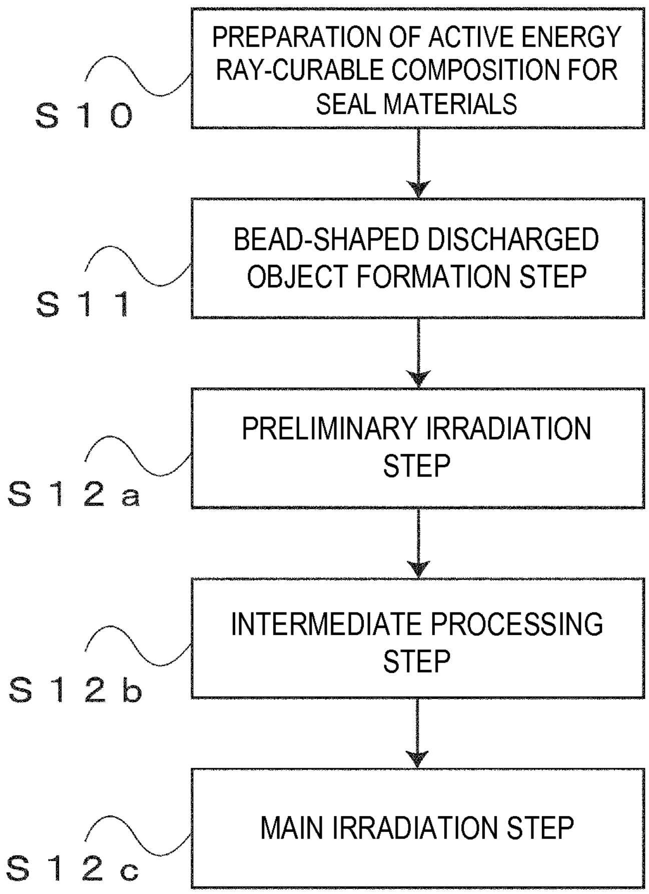

Figure. 9

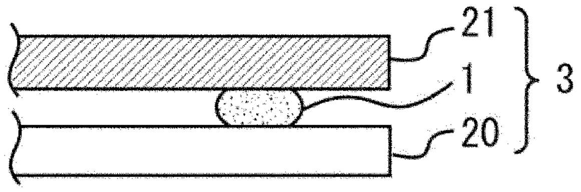


Figure. 10

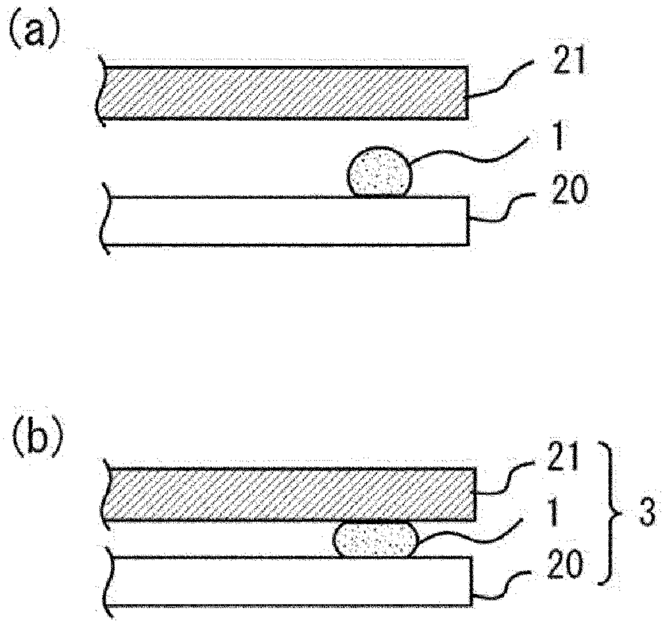

Figure. 11

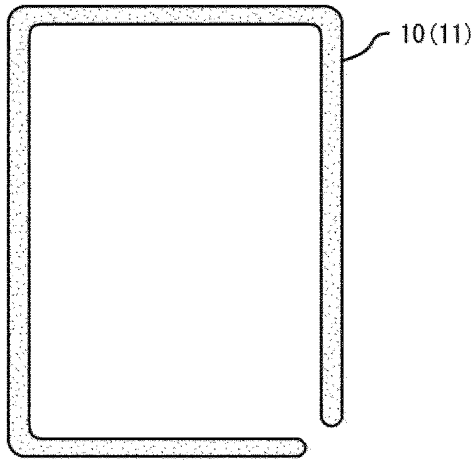


Figure. 12

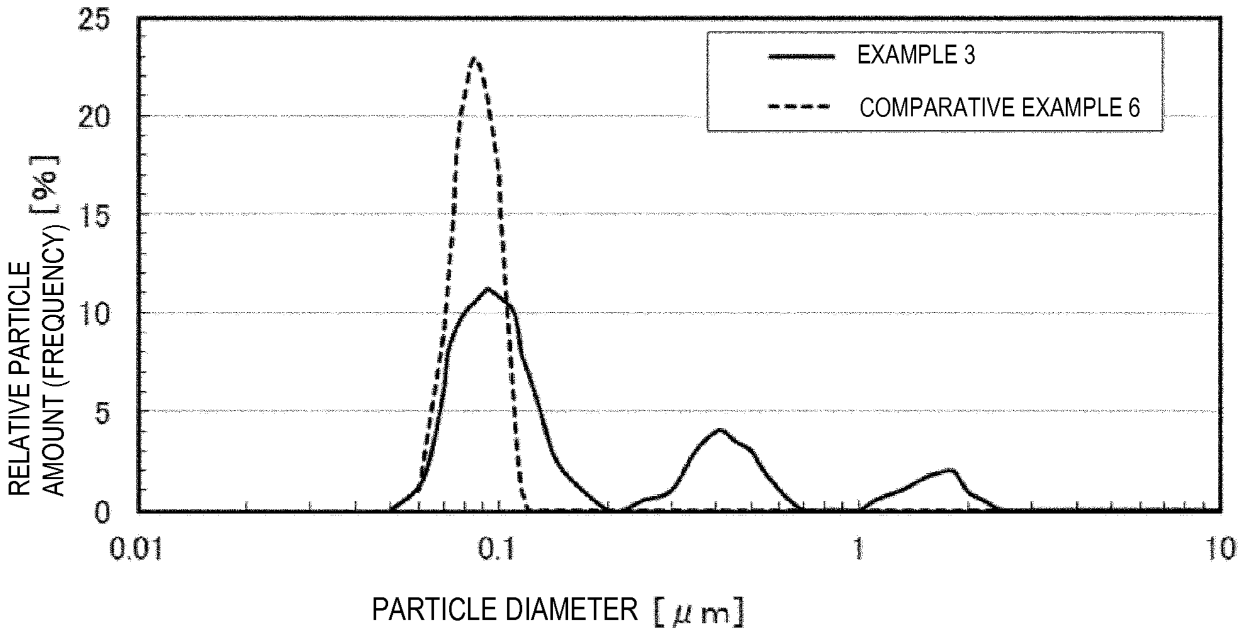

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003105320 A
- JP 2009090231 A
- JP 2008013429 A
- JP H06157857 A
- WO 2010142872 A1
- JP 2008094902 A
- JP 7088430 A
- JP 2004289943 A
- JP 2001182836 A
- JP 2003120819 A